# EUROPEAN PATENT APPLICATION

(11) **EP 4 692 242 A1**
(43) Date of publication of application: **11.02.2026**
(21) Application number: 24784655.3
(22) Date of filing: 06.03.2024
(51) Int. Cl.: C08L 83/07, C08K 5/14, C08L 83/04, C08L 83/05, D21H 27/00

(54) **CURABLE ORGANOPOLYSILOXANE COMPOSITION**

(30) Priority: 04.04.2023 JP 2023060920
(71) Applicant: SHIN-ETSU CHEMICAL CO., LTD., Tokyo 1000005 (JP)
(72) Inventor: YAMAMOTO, Kenji, Annaka-shi, Gunma 379-0224 (JP); ONOZAWA, Hayato, Annaka-shi, Gunma 379-0224 (JP); KOBAYASHI, Ataru, Annaka-shi, Gunma 379-0224 (JP); IHARA, Toshiaki, Annaka-shi, Gunma 379-0224 (JP)
(74) Representative: Ter Meer Steinmeister & Partner
(86) International application number: PCT/JP2024/008398
(87) International publication number: WO 2024/209860

(57) **Abstract**

The present invention provides a curable organopolysiloxane composition which is capable of undergoing an addition reaction with a small amount of a platinum group metal catalyst and has curability equivalent to those of conventional ones, the curable organopolysiloxane composition being also capable of forming a cured film having a peel strength equivalent to those of conventional ones especially for release paper and release films, and in which curing by an addition reaction proceeds even if a base material contains a catalyst poison component. The curable organopolysiloxane composition contains: (A) an organopolysiloxane which has two or more silicon atom-bonded alkenyl groups in each molecule, but does not have three or more (meth)acrylic groups in each molecule; (B) an organohydrogen polysiloxane which has two or more silicon atom-bonded hydrogen atoms on average in each molecule, but does not have three or more (meth)acrylic groups; (C) a compound which is other than an organopolysiloxane among compounds having one or more (meth)acrylic groups in each molecule, and has a molecular weight of 72 to 1,000, and the like; and (D) a platinum group metal catalyst.

## Description

### TECHNICAL FIELD

The present invention relates to a curable organopolysiloxane composition that can be cured with a small amount of platinum and particularly to an organopolysiloxane composition for release paper or release film.

### BACKGROUND ART

Conventional organopolysiloxane compositions that are cured by a platinum-catalyzed addition reaction can be fully cured in a short time under relatively low-temperature heating conditions and therefor have been widely used in various applications such as coating agents, base polymers for paints, binders for molded products, and adhesives.

However, platinum group metals used as catalysts are rare precious metals on the earth and are expensive, and a platinum catalyst accounts for a significant portion of the cost of production in any of these applications. Therefore, the most effective means for reducing costs is to reduce the amount of the platinum group metal catalyst used.

Moreover, certain production raw materials contain components such as nitrogen compounds, sulfur compounds, and phosphorus compounds that serve as catalyst poisons for platinum group metal-based catalysts. One problem in this case is that these catalyst poison components may bond to a platinum group metal, preventing the curing process by an addition reaction from proceeding. Therefore, there is a need for a curable organopolysiloxane composition with reduced susceptibility to catalyst poisoning.

The features of platinum-catalyzed addition curing have been utilized in applications such as release paper and release film. It is known that, to prevent bonding or adhesion between a sheet-like substrate such as a paper or plastic substrate and an adhesive material, a cured film of an organopolysiloxane composition is formed on the surface of the substrate to impart release properties.

In conventional organopolysiloxane compositions for release paper or release film, a platinum group metal-based catalyst is often used in an amount of 100 to 500 ppm by weight in terms of the concentration of the platinum group metal. This is because of the following reason. If the platinum concentration is less than 100 ppm by weight, the curing reaction does not proceed sufficiently. In this case, the cured film is soft, and the amount of residual Si-H groups is large, so that the release force is high. Moreover, an unreacted portion of the organopolysiloxane raw material remains and serves as a migrating component, and therefore the remaining organopolysiloxane migrates to an adhesive surface bonded to the release paper, causing a reduction in adhesive force.

Various methods for solving these problems have been studied. In a method proposed in WO 2020/004254 and WO 2020/145151, a (meth)acrylic group-containing compound is added to a platinum-catalyzed addition curable composition. With this method, a cured film with good release force and a high residual adhesion rate can be formed even when the amount of the platinum catalyst added is smaller than the conventionally used amount.

WO 2021/020247 reports that, even when the above method is applied to a platinum catalyst composition, a good cured film can also be formed using a smaller amount of the platinum catalyst added.

However, even when the method is applied to substrates such as plastic film substrates that do not easily adhere to cured silicone films or to substrates such as glassine paper on which the addition curable silicone composition cures less easily than on other substrates, it cannot be said that the amount of the platinum catalyst added can be reduced while sufficient curability and adhesiveness are maintained. In the current market, there is a potential demand for applying the above method to these substrates, and technological development that can solve the problems is needed.

### PRIOR ART DOCUMENTS

### PATENT DOCUMENTS

| | |
|---|---|
| Patent Document 1: | WO 2020/004254 |
| Patent Document 2: | WO 2020/145151 |
| Patent Document 3: | WO 2021/020247 |

### SUMMARY OF INVENTION

### TECHNICAL PROBLEM

The present invention has been made in view of the circumstances described above, and it is an object to provide a curable organopolysiloxane composition used particularly for release paper or release film. The curable organopolysiloxane composition can undergo an addition reaction using a reduced amount of a platinum group metal-based catalyst and can form a cured film having a release force comparable to that of conventional films. Moreover, the curable organopolysiloxane composition can also be applied to plastic film substrates that do not easily adhere to cured silicone films and to substrates on which the silicone composition is less easily cured by an addition reaction due to the presence of a catalyst poison component etc.

### SOLUTION TO PROBLEM

The present inventors have conducted extensive studies to achieve the above object and found that the foregoing problems can be solved by adding, to an addition reaction-curable organopolysiloxane composition, an organopolysiloxane having a trivinylsiloxane unit at a molecular terminal and serving as component (A) and a compound having at least one (meth)acrylic group per molecule and serving as component (C), and thus the invention has been completed.

Accordingly, the invention provides the following curable organopolysiloxane composition, more particularly a curable organopolysiloxane composition for release paper or release film (this composition may be hereinafter referred to simply as an organopolysiloxane composition).
1. A curable organopolysiloxane composition containing the following components (A) to (D):
   (A) 100 parts by weight of an organopolysiloxane, wherein the organopolysiloxane has at least two silicon-bonded alkenyl groups per molecule with an alkenyl group content of 0.001 to 0.7 mol/100 g and has less than three (meth)acrylic groups per molecule, wherein, in 50% by weight or more of component (A), at least one molecular terminal is capped with a siloxane unit represented by the following formula (1),

      (CH₂=CH-)₃SiO_{1/2} (1)

      and wherein the organopolysiloxane has a viscosity of 7 mPa·s or more as measured by a rotational viscometer at 25°C and has a 30 wt% toluene solution viscosity (a viscosity of a solution prepared by dissolving the organopolysiloxane in toluene at 30% by weight) of 70,000 mPa·s or less as measured by a rotational viscometer at 25°C;
   (B) an organohydrogenpolysiloxane, wherein the organohydrogenpolysiloxane has on average at least two silicon-bonded hydrogen atoms (Si-H groups) per molecule and has less than three (meth)acrylic groups per molecule, and wherein component (B) is contained in such an amount that the number of moles of Si-H groups in component (B) is 1 to 10 times the number of moles of alkenyl groups in component (A);
   (C) at least one selected from the following (C-1) and (C-2) in an amount of 0.01 to 5.0 parts by weight based on 100 parts by weight of component (A),
      (C-1) a compound that is different from organopolysiloxanes, has at least one (meth)acrylic group per molecule, and has a molecular weight of 72 to 1,000, and
      (C-2) an organopolysiloxane that has at least three (meth)acrylic groups per molecule and is a compound having a polystyrene-equivalent weight average molecular weight of 500 or more and 20,000 or less as measured by gel permeation chromatography (GPC) analysis (solvent: toluene) of the organopolysiloxane; and
   (D) a platinum group metal-based catalyst in such an amount that a platinum concentration is 1 to 100 ppm by weight based on a total weight of components (A), (B), (C), and (D).
2. The curable organopolysiloxane composition according to 1, further containing (E) a diluting solvent in an amount of 0 to 100,000 parts by weight based on 100 parts by weight of component (A).
3. The curable organopolysiloxane composition according to 1 or 2, further containing (F) a reaction inhibitor in an amount of 0.01 to 5.0 parts by weight based on 100 parts by weight of component (A).
4. The curable organopolysiloxane composition according to any of 1 to 3, wherein component (B) includes component (B) in which 5 to 30% by mol of the total number of substituents on Si atoms are phenyl groups.
5. The curable organopolysiloxane composition according to any of 1 to 4, wherein component (A) includes component (A) in which 1 to 20% by mol of the total number of substituents on Si atoms are phenyl groups.
6. The curable organopolysiloxane composition according to any of 1 to 5, further containing, in an amount of 0.1 to 20.0 parts by weight based on 100 parts by weight of component (A), (G) an organopolysiloxane having at least two alkenyl groups and including, as essential units, R¹⁰_{(3-g1})R⁹_{g1}SiO_{1/2} siloxane units (M^{R9R10} units) and R¹⁰SiO_{3/2} siloxane units (T^{R10} units), wherein each R⁹ is independently an alkenyl group; each R¹⁰ is independently an unsubstituted or halo- or cyano-substituted monovalent hydrocarbon group free of aliphatic unsaturation; and g1 is an integer of 1 to 3, wherein a molar ratio of the M^{R9R10} units/the T^{R10} units is 2/8 to 8/2, wherein organopolysiloxane (G) has a viscosity at 25°C in a range of 1 to 1,000 mPa·s, and wherein molecular terminals of organopolysiloxane (G) are M^{R9R10} units or are M^{R9R10} units and partially silanol or alkoxy groups.
7. The curable organopolysiloxane composition according to any of 1 to 6, wherein component (C) is an organopolysiloxane having, per molecule, one or more bifunctional and/or trifunctional siloxane units each having a (meth)acrylic group.
8. The curable organopolysiloxane composition according to any of 1 to 7, further containing (H) an organic peroxide in an amount of 0.01 to 5.0 parts by weight based on 100 parts by weight of component (A).
9. The curable organopolysiloxane composition according to 8, wherein component (H) is a polyfunctional organic peroxide having at least two peroxy bonds per molecule.
10. The curable organopolysiloxane composition according to any of 1 to 9, wherein platinum group metal-based catalyst (D) is contained in such an amount that the platinum concentration is 1 to 40 ppm by weight based on the total weight of components (A), (B), (C), and (D).
11. The curable organopolysiloxane composition according to any of 1 to 10, wherein the curable organopolysiloxane composition is used for release paper or release film.
12. A method for producing release paper or release film using the organopolysiloxane composition for release paper or release film according to 11.

### ADVANTAGEOUS EFFECTS OF INVENTION

The present invention can provide a curable organopolysiloxane composition that can undergo an addition reaction using a reduced amount of a platinum group metal-based catalyst and has curability comparable to that of conventional compositions and more particularly an organopolysiloxane composition for release paper or release film that is capable of forming a cured film with a release force comparable to that of conventional films.

With the organopolysiloxane composition, a cured silicone film can be formed even under conditions in which conventional compositions do not easily cure. Therefore, the cost of production can be significantly reduced, and a cured film can be formed via an addition reaction even on a substrate containing a catalyst poison.

### DESCRIPTION OF EMBODIMENTS

The present invention will next be described in detail.

### [Component (A)]

Component (A) in the invention is an organopolysiloxane having at least two silicon-bonded alkenyl groups per molecule with an alkenyl group content of 0.001 to 0.7 mol/100 g and having less than three (meth)acrylic groups per molecule. In 50% by weight or more of component (A), at least one molecular terminal is capped with a siloxane unit represented by the following formula (1).

(CH₂=CH-)₃SiO_{1/2} (1)

The organopolysiloxane has a viscosity of 7 mPa·s or more as measured by a rotational viscometer at 25°C and has a 30 wt% toluene solution viscosity (the viscosity of a solution prepared by dissolving the organopolysiloxane in toluene at 30% by weight) of 70,000 mPa·s or less as measured by a rotational viscometer at 25°C. One organopolysiloxane may be used alone, or an appropriate combination of two or more organopolysiloxanes may be used.

Component (A) may be an organopolysiloxane having a structure represented by the following formula (2).

M_{α}M^{Vi}_{β}D_{γ}D^{Vi}_{δ}T_{ε}T^{Vi}_{ζ}Q_{η} (2)

In formula (2), M is R₃SiO_{1/2}, and M^{Vi} is RₐP₍₃₋ₐ₎SiO_{1/2}. D is R₂SiO_{2/2}, and D^{Vi} is RPSiO_{2/2}. T is RSiO_{3/2}, and T^{Vi} is PSiO_{3/2}. Q is SiO_{4/2}, and a is an integer of 0 to 3. In the above formula, the letters α, δ, ε, ζ, and η are each independently 0 or a positive number, and β and γ are each a positive number.

50% by weight or more of component (A) is an organopolysiloxane in which at least one molecular terminal is capped with the monofunctional siloxane unit represented by formula (1). In formula (2) above, at least one M^{Vi} in one molecule is a (CH₂=CH-)₃SiO_{1/2} unit in formula (1) that corresponds to M^{Vi} with a = 0. This organopolysiloxane accounts for preferably 60% by weight or more of component (A) and more preferably 70% by weight or more of component (A). If the ratio of this organopolysiloxane is less than 50% by weight of component (A), the curability deteriorates.

The remaining less than 50% by weight of component (A) may be the organopolysiloxane represented by formula (2) with no molecular terminal capped with the monofunctional siloxane unit in formula (1) above. However, if the amount of this organopolysiloxane added is 50% by weight or more, the curability deteriorates.

In formula (2), each R is independently an unsubstituted or substituted monovalent hydrocarbon group free of aliphatic unsaturation and having 1 to 12 carbon atoms, preferably 1 to 10 carbon atoms, and more preferably 1 to 8 carbon atoms.

Specific examples of R include: alkyl groups such as a methyl group, an ethyl group, a propyl group, a butyl group, a pentyl group, a hexyl group, an octyl group, a decyl group, and a dodecyl group; cycloalkyl groups such as a cyclohexyl group; aryl groups such as a phenyl group, a naphthyl group, and a tolyl group; aralkyl groups such as a benzyl group and a phenethyl group; and substituted forms of the foregoing groups in which some carbon-bonded hydrogen atoms are substituted with halogen atoms, epoxy groups, amino groups, polyether groups, cyano groups, hydroxy groups, etc.

In particular, it is preferable that 80% by mol or more of the total number of R groups are methyl groups, from the viewpoint of curability and reducing the release force of the cured product to be obtained. When it is necessary to further increase the adhesiveness to a film substrate, it is preferable that 1 to 20% by mol of the total number of R groups are aryl groups, and aryl groups account for more preferably 1 to 15% by mol, still more preferably 1 to 10% by mol, and yet more preferably 1 to 5% by mol of the total number of R groups. The aryl groups used are preferably phenyl group, from an industrial point of view.

Some of the R groups may be (meth)acrylic group-containing groups represented by the following formula (3).

CH₂=CR¹COR²- (3)

However, the number of (meth)acrylic groups per molecule is less than three. If the number of (meth)acrylic groups is three or more, the releasability of the cured film deteriorates. R¹ is a hydrogen atom or a methyl group and is preferably a hydrogen atom. R² is a divalent group represented by OR³ or R³. R³ is a divalent organic group having 1 to 20 carbon atoms, may have a branched or cyclic structure, and may contain an epoxy group, an ester bond, a urethane bond, an ether bond, an isocyanate bond, or a hydroxy group. Examples of R³ include divalent hydrocarbon groups including: linear alkylene groups such as a methylene group, an ethylene group, a propylene group, a butylene group, a hexamethylene group, an octamethylene group, and a decylene group; branched alkylene groups such as a methylethylene group and a methylpropylene group; cyclic alkylene groups such as a cyclohexylene group; alkenylene groups such as a propenylene group; arylene groups such as a phenylene group; and aralkylene groups such as a methylenephenylene group and a methylenephenylenemethylene group. In these divalent hydrocarbon groups, an ester bond, a urethane bond, an ether bond, or an isocyanate bond may be interposed between carbon atoms. A plurality of types of divalent hydrocarbon groups including these bonds may be contained. In these divalent hydrocarbon groups, some or all of the hydrogen atoms may be substituted with epoxy or hydroxy groups. In particular, R³ is preferably a propylene group.

P is an alkenyl group represented by -(CH₂)ₙ-CH=CH₂ (n is an integer of 0 to 8). n is 0 to 8, preferably 0 to 6, and more preferably 0 to 4. Specific examples of P include a vinyl group, an allyl group, a butenyl group, a propenyl group, a 5-hexenyl group, an octenyl group, and a decenyl group. Of these, a vinyl group is preferred.

The letters α, δ, ε, ζ, and η in formula (2) are each independently 0 or a positive number. β and are each a positive number, and 2 ≤ β + δ + ζ ≤ 4,000. It is preferable that 2 ≤ β + δ + ζ ≤ 1,000. α is preferably 0 or 1 to 100, more preferably 1 to 80, and still more preferably 1 to 60. β is preferably 1 to 100, more preferably 1 to 80, and still more preferably 1 to 60. α + β is preferably 2 to 200, more preferably 2 to 100, and still more preferably 2 to 50. δ is preferably 0 or 1 to 3,000, more preferably 1 to 2,000, and still more preferably 1 to 1,500. ζ is preferably 0 or 1 to 100, more preferably 0 or 1 to 40, and still more preferably 0 or 1 to 20.

γ is 5 to 27,000 and is preferably 10 to 20,000, more preferably 40 to 20,000, still more preferably 100 to 20,000, yet more preferably 500 to 15,000, and even more preferably 1,000 to 15,000. If γ is less than 10, the kinematic viscosity of the organopolysiloxane composition is excessively low, and the surface of the coating may be roughened. If γ exceeds 27,000, the kinematic viscosity of the organopolysiloxane composition is excessively high, and the ease of application deteriorates. In this case, the smoothness of the coating may be low, and variations in coating weight may be large.

ε is a positive number of 0 to 200 and is preferably a positive number of 0 to 20 and more preferably a positive number of 0 to 10. η is a positive number of 0 to 1,000 and is preferably a positive number of 0 to 10 and more preferably a positive number of 0 to 5.

The content of alkenyl groups in component (A) is 0.001 to 0.7 mol/100 g and is more preferably 0.002 to 0.5 mol/100 g, still more preferably 0.003 to 0.1 mol/100 g, and yet more preferably 0.005 to 0.07 mol/100 g. If the content of alkenyl groups is less than 0.001 mol/100 g, the number of reaction sites is excessively small, and a curing failure may occur. If the content of alkenyl groups exceeds 0.7 mol/100 g, the crosslinking density may increase excessively, which may lead to an excessive increase in low-speed release force or deterioration in releasability.

The number average molecular weight of component (A) is preferably 800 or more and 2,000,000 or less and more preferably 3,000 or more and 1,000,000 or less. When the composition uses component (E) serving as a diluting solvent, more preferred results can be obtained when the number average molecular weight of component (A) is increased to 10,000 or more. If the number average molecular weight of component (A) is lower than 800, the coating weight on the substrate may be insufficient. If the number average molecular weight exceeds 2,000,000, workability may deteriorate. In the present invention, the number average molecular weight can be measured as a polystyrene-equivalent number average molecular weight by gel permeation chromatography (GPC) analysis (solvent: toluene) (the same applies to the following).

In the present invention, the number average molecular weight is a value measured by the GPC analysis under the following measurement conditions.

| | |
|---|---|
| Device: | High-performance GPC system HLC-8320 manufactured by TOSOH Corporation |
| Analysis column: | TSKgel Super HZ manufactured by TOSOH Corporation |
| Eluent: | Toluene |
| Flow rate: | 0.35 mL/min |
| Column temperature: | 40°C |
| Amount of sample fed: | 2,500 µL |
| Detector: | RI |
| Molecular weight computation: | Polystyrene-equivalent molecular weight computed using a calibration curve prepared from analysis values of polystyrene molecular weight standard samples |

Component (A) preferably has a viscosity of 7 mPa·s or more as measured by a rotational viscometer at 25°C and a 30 wt% toluene solution viscosity (the viscosity of a solution prepared by dissolving the organopolysiloxane in toluene at 30% by weight) of 70,000 mPa·s or less as measured by a rotational viscometer at 25°C, more preferably has a viscosity of 10 mPa·s or more and a 30 wt% toluene solution viscosity of 60,000 mPa·s or less, still more preferably has a viscosity of 30 mPa·s or more and a 30 wt% toluene solution viscosity of 50,000 mPa·s or less, and yet more preferably has a viscosity of 50 mPa·s or more and a 30 wt% toluene solution viscosity of 40,000 mPa·s or less. When the composition uses component (E) serving as the diluting solvent, more preferred results can be obtained when the viscosity of component (A) measured by a rotational viscometer at 25°C is increased to 30,000 mPa·s or more or the 30 wt% toluene solution viscosity is increased to 100 mPa·s or more. If the viscosity is less than 7 mPa·s, the coating weight may be insufficient. If the 30 wt% toluene solution viscosity exceeds 70,000 mPa·s, the workability may deteriorate.

In the present invention, the viscosity of component (A) is a value measured using a BM-type viscometer (manufactured by, for example, TOKYO KEIKI Inc.). The rotor, the rotation speed, and the rotation time are appropriately selected by a routine procedure according to the viscosity.

The viscosity of a solution prepared by dissolving the organopolysiloxane in toluene at 30% by weight is a value measured by adding 150 g of the organopolysiloxane to 350 g of toluene, stirring the mixture until the organopolysiloxane is fully dissolved, and then performing the viscosity measurement described above.

Specific examples of component (A) include siloxanes having alkenyl groups at both ends, siloxanes having alkenyl groups on side chains, siloxanes having alkenyl groups at one end and on side chains, siloxanes having alkenyl groups at both ends and on side chains, siloxanes having alkenyl groups at branched ends, and siloxanes having alkenyl groups at branched ends and on side chains.

Examples of the organopolysiloxane include those represented by the following structural formulas:
M^{Vi}₂D_{γ}, MM^{Vi}D_{γ}, M₂D_{γ}D^{Vi}_{δ}, MM^{Vi}D_{γ}D^{Vi}_{δ}, M^{Vi}₃D_{γ}T₁, MM^{Vi}₂D_{γ}T₁,M^{Vi}₄D_{γ}T₂, M^{Vi}₂D_{γ}D^{Vi}_{δ}, M^{Vi}₂D_{γ}Q₁, MM^{Vi}D_{γ}Q₁, M_{α}D_{γ}D^{Vi}_{δ}T^{Vi}_{ζ}, and M_{α}M^{Vi}_{α}D_{γ}D^{Vi}_{δ}T^{Vi}_{ζ}
(M, M^{vi} D, D^{Vi}, T, T^{Vi}, Q, γ, δ, and ζ are the same as those in formula (2). The same applies to the following.).

More specific examples of the structure include the following:
M^{Vi}₂D₁₀₀, M₂D₉₇D^{Vi}₃, MM^{Vi}D₉₇D^{Vi}₃, M₂D₂₆D^{Vi}₄, M₂D₉₆D^{Vi}₄, M₂D₉₅D^{Vi}₅, MM^{Vi}D₉₅D^{Vi}₅, M^{Vi}₃D₁₀₀T₁, M^{Vi}₄D₁₀₀T₂, MM^{Vi}D₁₀₀T₂, M^{Vi}₂D₉₇D^{Vi}₁, MM^{Vi}D₉₇D^{Vi}₁, M^{Vi}₂D₉₅D^{Vi}₃, MM^{Vi}D₉₅D^{Vi}₃, M₃D₉₃D^{Vi}₃T^{Vi}₁, M₂M^{Vi}D₉₃D^{Vi}₃T^{Vi}₁, M^{Vi}₂D₂₀₀₀₀, MM^{Vi}D₂₀₀₀₀, M₂D₁₀₀₀₀D^{Vi}₂₀, MM^{Vi}D₁₀₀₀₀D^{Vi}₂₀, M^{Vi}₂D_{100γ}Q₁, and MM^{Vi}D₂₀₀Q₁.

### [Component (B)]

Component (B) is an organohydrogenpolysiloxane having on average at least two silicon-bonded hydrogen atoms (Si-H groups) per molecule and having less than three (meth)acrylic groups per molecule (i.e., containing no component (C) described later). One component (B) may be used alone, or two or more components (B) may be used in combination. An addition reaction occurs between Si-H groups in the organohydrogenpolysiloxane and alkenyl groups in component (A), and a cross-linked organopolysiloxane product is thereby formed.

The organohydrogenpolysiloxane serving as component (B) has preferably 3 to 100 silicon-bonded hydrogen atoms (Si-H groups) per molecule and more preferably 10 to 80 silicon-bonded hydrogen atoms (Si-H groups) per molecule.

The content of Si-H groups is preferably 0.001 to 3.5 mol/100 g, more preferably 0.01 to 2.5 mol/100 g, still more preferably 0.02 to 2.0 mol/100 g, and yet more preferably 0.1 to 1.7 mol/100 g. If the content of Si-H groups is excessively small, the curability and adhesiveness may deteriorate. If the content of Si-H groups is excessively large, the release force may increase.

Preferably, the organohydrogenpolysiloxane serving as component (B) has the structure represented by the following formula (4).

MₒM^{H}_{π}D_{ρ}D^{H}_{σ}T_{τ}T^{H}ϕQ_{χ} (4)

In formula (4), M is R'₃SiO_{1/2}, and M^{H} is R'₂HSiO_{1/2}. D is R'₂SiO_{2/2}, and D^{H} is R'HSiO_{2/2}. T is R'SiO_{3/2}, and T^{H} is HSiO_{3/2}. Q is SiO_{4/2}, and each R' is independently an unsubstituted or substituted monovalent hydrocarbon group free of aliphatic unsaturation and having 1 to 12 carbon atoms. o, π, ρ, and τ are each independently 0 or a positive number, and π is 0 or a positive number of 1 to 40. σ is a positive number of 0 to 100, and ϕ is a positive number of 0 to 10. χ is a positive number of 0 to 10. π, σ, and ϕ are not all 0 simultaneously, and 2 ≤ π + σ + ϕ ≤ 100.

Examples of R' in formula (4) are the same as those of R in formula (2). In particular, R' is preferably a monovalent hydrocarbon group having 1 to 8 carbon atoms.

Specific examples of the monovalent hydrocarbon group include: alkyl groups such as a methyl group, an ethyl group, a propyl group, a butyl group, a pentyl group, a hexyl group, an octyl group, a decyl group, and a dodecyl group; cycloalkyl groups such as a cyclohexyl group; aryl groups such as a phenyl group, a naphthyl group, and a tolyl group; aralkyl groups such as a benzyl group and a phenethyl group; and substituted forms of the foregoing groups in which some carbon-bonded hydrogen atoms are substituted with halogen atoms, epoxy groups, or polyether groups.

When it is necessary to further increase the adhesiveness to a film substrate, it is preferable that 5 to 30% by mol of the total number of R' groups and H atoms are aryl groups, and aryl groups account for more preferably 6 to 25% by mol. The aryl groups used are preferably phenyl groups from an industrial point of view.

In formula (4) above, o, π, ρ, and τ are each independently 0 or a positive number. o is preferably 0 or 1 to 10, more preferably 0 or 1 to 8, and still more preferably 0 or 1 to 5. π is preferably 0 or 1 to 10, more preferably 0 or 1 to 8, and still more preferably 0 or 1 to 5. o + π is preferably 2 to 12 and more preferably 2 to 10, and ρ is preferably 0 or 1 to 100, and more preferably 0 or 1 to 8, and still more preferably 0 or 1 to 5. 1 is preferably 0 or 1 to 10, more preferably 1 to 8, and still more preferably 1 to 5. σ is a positive number of 0 to 100 and is preferably 2 to 100 and more preferably 10 to 80. ϕ is preferably a positive number of 0 to 10 and is preferably 0 to 5, and χ is 0 to 10 and is preferably a positive number of 0 to 5. π, σ, and ϕ are not all 0 simultaneously, and π + σ + ϕ is 3 to 100 and is preferably 10 to 80.

Specific examples of the organohydrogenpolysiloxane serving as component (B) include siloxanes having hydrogensilyl groups at both ends, siloxanes having hydrogensilyl groups on side chains, siloxanes having hydrogensilyl groups at one end and on side chains, siloxanes having hydrogensilyl groups at both ends and on side chains, siloxanes having hydrogensilyl groups at branched ends, and siloxanes having hydrogensilyl groups at branched ends and on side chains.

Examples of the organohydrogenpolysiloxane include those represented by the following structural formulas:
M^{H}₂D_{ρ}, M₂D^{H}_{σ}, M₂D_{ρ}D^{H}_{σ}, M^{H}₂D_{ρ}D^{H}_{σ}, M^{H}₃D_{ρ}T₁, M^{H}₄D_{ρ}T₂, and MₒD_{ρ}D^{H}₆T^{H}_{ϕ}MₒD_{ρ}D^{H}_{ρ}T^{H}_{ϕ}Q_{χ}
(M, M^{H}, D, D^{H}, T, T^{H}, Q, o, ρ, σ, ϕ, and χ are the same as those in formula (4). The same applies to the following.).

More specific examples of the structure include the following:
M^{H}₂D₁₀, M^{H}₂D₁₀₀, M₂D^{H}₈₀, M₂D₂₇D^{H}₃, M₂D₉₇D^{H}₃, M₂D₂₆D^{H}₄, M₂D₂₅D^{H}₅, M₂D₂₄D^{H}₆, M₂D₉₆D^{H}₄, M₂D₉₅D^{H}₅, M^{H}₃D₁₀₀T₁, M^{H}₄D₁₀₀T₂, M^{H}₂D₉₇D^{H}₁, M^{H}₂D₉₅D^{H}₃, M₃D₉₃D^{H}₃T^{H}₁, M₅D₁₀D^{H}₄₀T₁Q₁, M₅D₁₀D^{H}₄₀T^{H}₁Q₁, M^{H}₅D₁₀D^{H}₄₀T₁Q₁, M₂D^{H}₃₀, and M₂D^{H}₆₀.

The number average molecular weight of component (B) is preferably 194 to 10,000 and more preferably 874 to 5,000. If the number average molecular weight of component (B) is excessively small, the adhesiveness may deteriorate significantly. If the number average molecular weight is excessively large, the reactivity may be low, and the curability may deteriorate. In this case, a reduction in residual adhesion rate or an increase in release force due to insufficient curability may occur.

The kinematic viscosity of the component (B) measured by an Ostwald viscometer at 25°C is preferably 2 to 500 mm²/s, more preferably 2 to 300 mm²/s, and still more preferably 5 to 200 mm²/s. If the kinematic viscosity at 25°C is less than 2 mm²/s, the reactivity is good because of the small molecular weight, but the adhesiveness to a substrate may deteriorate. If the kinematic viscosity at 25°C exceeds 500 mm²/s, the reactivity may decrease, and the curability may deteriorate. In this case, a reduction in residual adhesion rate or an increase in release force due to insufficient curability may occur.

The amount of component (B) added is such that the number of moles of Si-H groups in component (B) is 1.0 to 10.0 times the number of moles of alkenyl groups in component (A). The number of moles of Si-H groups in component (B) is preferably 1.2 to 6.0 times, more preferably 1.5 to 6.0 times, and still more preferably 2.0 to 6.0 times the number of moles of alkenyl groups in component (A). If the amount of component (B) is excessively small, the curability and adhesiveness are insufficient. If the amount of component (B) is excessively large, the amount of remaining Si-H groups is large, resulting in a large release force. In this case, since the amount of Si-H groups decreases over time, the release force varies over time.

### [Component (C)]

Component (C) in the invention includes (C-1) a compound that is different from organopolysiloxanes, has at least one (meth)acrylic group per molecule, and has a molecular weight of 72 to 1,000 and/or (C-2) an organopolysiloxane that has at least three (meth)acrylic groups per molecule and is a compound having a polystyrene-equivalent weight average molecular weight of 500 or more and 20,000 or less as measured by gel permeation chromatography (GPC) analysis (solvent: toluene) of the organopolysiloxane. One component (C) may be used alone, or an appropriate combination of two or more components (C) may be used. The upper limit of the weight average molecular weight of component (C-2) is preferably 10,000 or less and more preferably 5,000 or less. When component (C) is a siloxane, its molecular weight can be measured by ²⁹Si-NMR. The Si-NMR device used may be, for example, Win Lambda manufactured by JEOL Ltd. The measurement method is as follows. 1.5 g of a sample and 3.5 g of d-chloroform are placed in a sample tube having a diameter of 10 mm and made of Teflon (registered trademark). The mixture is well-stirred and placed in the Si-NMR, and the measurement is performed with an accumulation number of 600.

Examples of compound (C-1) different from organopolysiloxanes include a compound represented by the following formula (5) and having one (meth)acrylic group:

CH₂=CR⁴COOR⁵ (5)

(wherein R⁴ is a hydrogen atom or a methyl group, and R⁵ is a hydrogen atom or an alkyl group having 1 to 20 carbon atoms, an aryl group, or an aralkyl group, may have a branched or cyclic structure, and may contain an epoxy group, a urethane bond, an ether bond, an isocyanate bond, or a hydroxy group).

Specific examples of R⁵ include a methyl group, an ethyl group, a propyl group, a butyl group, a hexyl group, a cyclohexyl group, a phenyl group, a dicyclopentanyl group, a dicyclopentenyl group, a furfuryl group, a tetrahydrofurfuryl group, a tetrahydropyranyl group, -CH₂CH₂-OH, -CH₂CH(CH₃)-OH, and -CH₂CH₂-NCO. Examples of the compound in which R⁵ has an epoxy group include compounds described below. The compound having a (meth)acrylic group and an epoxy group may be an oligomer.

Specific examples of the compound having one (meth)acrylic group and having a molecular weight of 72 to 1,000 include 2-ethylhexyl acrylate, 2-hydroxyethyl acrylate, acrylic acid, butyl acrylate, methyl acrylate, and ethyl acrylate.

Specific examples of the compound having a (meth)acrylic group and an epoxy group include 4-hydroxybutyl acrylate glycidyl ether.

Specific examples of the compound having two (meth)acrylic groups and having a molecular weight of 200 to 1,000 include tetraethylene glycol diacrylate, nonaethylene glycol diacrylate, tetradecanyl ethylene glycol diacrylate, tricyclodecane dimethanol diacrylate, 1,10-decanediol diacrylate, 1,6-hexanediol diacrylate, 1,9-nonanediol diacrylate, dipropylene glycol diacrylate, heptapropylene glycol diacrylate, and trimethylolpropane triacrylate.

When organopolysiloxane (C-2) is used as component (C), it is preferable that organopolysiloxane (C-2) is free of aliphatic unsaturation except for that in the (meth)acrylic groups. The (meth)acrylic group is meant to include an acrylic group and a methacrylic group. In particular, it is preferable that organopolysiloxane (C-2) has acrylic groups. It is more preferable that at least one of the (meth)acrylic groups is present as a substituent on a bifunctional siloxane unit and/or a trifunctional siloxane unit.

Examples of the organopolysiloxane include cyclic siloxanes and organopolysiloxanes having a linear or branched structure.

Organopolysiloxane (C-2) is preferably a compound having three or more siloxane units having (meth)acrylic groups and more preferably a compound having three to six siloxane units having (meth)acrylic groups. It is also preferable that organopolysiloxane (C-2) has no Si-H group and no alkenyl group.

The cyclic siloxane is preferably a compound represented by the following structural formula (6):

D^{1A}_{d'} (6)

(wherein D^{1A} is R⁶ASiO_{2/2}; each R⁶ is independently an unsubstituted or substituted monovalent hydrocarbon group having 1 to 18 carbon atoms, an alkoxy group, a hydrogen atom, a hydroxy group, an epoxy group, or a polyoxyalkylene group; A is CH₂=CR¹COR²-; R¹ is a hydrogen atom or a methyl group; R¹ is OR³ or R³; R³ is a divalent group having 1 to 20 carbon atoms, may have a branched or cyclic structure, and may contain an epoxy group, an ester bond, a urethane bond, an ether bond, an isocyanate bond, or a hydroxy group; and d' is 3 to 6).

The organopolysiloxane having a linear or branched structure is preferably an organopolysiloxane represented by the following formula (7) and having three or more (meth)acrylic groups on side chains:

M¹ₐM^{1A}_{b}D¹_{c}D^{1A}_{d}T¹ₑT^{1A}_{f}Q¹_{g} (7)

(wherein M¹ is R⁶₃SiO_{1/2}; M^{1A} is R⁶₂ASiO_{1/2}; D¹ is R⁶₂SiO_{2/2}; D^{1A} is R⁶ASiO_{2/2}; T¹ is R⁶SiO_{3/2}; T^{1A} is ASiO_{3/2}; Q¹ is SiO_{4/2}; each R⁶ is independently an unsubstituted or substituted monovalent hydrocarbon group having 1 to 18 carbon atoms, an alkoxy group, a hydrogen atom, a hydroxy group, an epoxy group, or a polyoxyalkylene group; A is CH₂=CR¹COR²-; R¹ is a hydrogen atom or a methyl group; R² is OR³ or R³; R³ is a divalent group having 1 to 20 carbon atoms, may have a branched or cyclic structure, and may contain an epoxy group, an ester bond, a urethane bond, an ether bond, an isocyanate bond, or a hydroxy group; a is an integer of 0 to 20; b is an integer of 0 to 5; when a is 0, b is an integer of 2 to 5; when a is 1, b is an integer of 1 to 5; when a is 2 to 20, b is an integer of 0 to 5; c is an integer of 0 to 300; d is an integer of 0 to 200; e and f are each an integer of 0 to 10; g is 0 to 5; and b + d + f is 3 or more).

In formulas (6) and (7) above, each R⁶ is independently an unsubstituted or substituted monovalent hydrocarbon group having 1 to 18 carbon atoms, an alkoxy group, a hydrogen atom, a hydroxy group, an epoxy group, or a polyoxyalkylene group. A monovalent hydrocarbon group having 1 to 12 carbon atoms is preferred, and a monovalent hydrocarbon group having 1 to 8 carbon atoms is more preferred. Specific examples of the monovalent hydrocarbon group include: alkyl groups such as a methyl group, an ethyl group, a propyl group, a butyl group, a pentyl group, a hexyl group, an octyl group, a decyl group, and a dodecyl group; alkenyl groups such as a vinyl group, an allyl group, a butenyl group, a propenyl group, a 5-hexenyl group, an octenyl group, and a decenyl group; cycloalkyl groups such as a cyclohexyl group; aryl groups such as a phenyl group, a naphthyl group, and a tolyl group; aralkyl groups such as a benzyl group and a phenethyl group; and substituted forms of the foregoing groups in which some carbon-bonded hydrogen atoms are substituted with halogen atoms, epoxy groups, amino groups, polyether groups, cyano groups, hydroxy groups, etc. Specific examples of the alkoxy group include a methoxy group, an ethoxy group, a propoxy group, and a butoxy group. Examples of the polyoxyalkylene group include a polyoxyethylene group and a polyoxypropylene group.

R¹ is a hydrogen atom or a methyl group and is preferably a hydrogen atom. R² is OR³ or R³, and R³ is a divalent group having 1 to 20 carbon atoms, may have a branched or cyclic structure, and may contain an epoxy group, an ester bond, a urethane bond, an ether bond, an isocyanate bond, or a hydroxy group. Specific examples of R³ include divalent hydrocarbon groups including: linear alkylene groups such as a methylene group, an ethylene group, a propylene group, a butylene group, a hexamethylene group, an octamethylene group, and a decylene group; branched alkylene groups such as a methylethylene group and a methylpropylene group; cyclic alkylene groups such as a cyclohexylene group; alkenylene groups such as a propenylene group; arylene groups such as a phenylene group; and aralkylene groups such as methylenephenylene and a methylenephenylenemethylene group. In these divalent hydrocarbon groups, an ester bond, a urethane bond, an ether bond, or an isocyanate bond may be interposed between carbon atoms, and a combination of any of these groups may be used. In these divalent hydrocarbon group, some or all of the hydrogen atoms may be substituted with epoxy or hydroxy groups. In particular, R³ is preferably a propylene group.

In formula (7), a is an integer of 0 to 20, and b is an integer of 0 to 5. When a is 0, b is an integer of 2 to 5. When a is 1, b is an integer of 1 to 5. When a is 2 to 20, b is an integer of 0 to 5. a is preferably 2 or 3. In this case, b is preferably 0.

c is an integer of 0 to 300 and is preferably an integer of 5 to 200, still more preferably an integer of 10 to 100, and yet more preferably an integer of 15 to 70.

d is an integer of 0 to 200 and is preferably an integer of 3 to 50, more preferably an integer of 3 to 30, and still more preferably an integer of 3 to 20. Even when d is less than 3, the compound is usable. However, under some conditions, such as when the catalyst amount is low, the curability may deteriorate. When d exceeds 200, the curability may also deteriorate.

e and f are each an integer of 0 to 10 and is preferably an integer of 0 to 6 and more preferably an integer of 0 to 3. When e is 10 or more, the curability may deteriorate, but the reason for this is unclear. Similarly, when f is 10 or more, the curability may deteriorate.

g is 0 to 5 and is preferably 0 or 1. A value of g exceeding 5 is undesirable because the viscosity during production is difficult to control and the release force increases.

Specific examples of organopolysiloxane compound (C-2) having at least three (meth)acrylic groups and having a molecular weight of 500 or more include the following compounds:
D^{1A}₃, D^{1A}₄, D^{1A}₅, M¹₂D^{1A}₃D¹₂, M¹₃D^{1A}₃T¹₁, M¹₃D^{1A}₂T^{1A}, M¹₂D¹₅D^{1A}₃, M¹₂D¹₂₀D^{1A}₅, M^{1Vi}₂D¹₂₀D^{1A}₅, M¹₂D¹₃₀D^{1A}₇, M^{1ϕ}₂D¹₃₀D^{1A}₇, M¹₂D¹₂₅D^{1ϕ}₅D^{1A}₇, M¹₂D¹₆₅D^{1A}₁₅, M^{1Vi}₂D¹₆₅D^{1A}₁₅, M¹₂D¹₆₁D^{1OH}₄D^{1A}₁₅, M¹₂D¹₆₃D^{1OSiR'}₂D^{1A}₁₅, M^{1H}₂D¹₆₅D^{1A}₁₅, M¹₁M^{1A}₁D¹₁₀D^{1A}₃, M^{1OSiR'}₂D¹₂₀D^{1A}₅, M¹₂D¹₂₀D^{1A}₅, M¹₂D¹₃₂D^{1A}₅, M^{1A}₂D¹₃₇D^{1A}₈, M¹₃D¹₂₀D^{1A}_{S}T¹₁, M¹₃D¹₁₁₀D^{1A}₆T¹₁, M¹₂D¹₁₇₀D^{1A}₂₂, M¹₂D¹₁₇₀D^{1A}₂₀Q¹₁, and M¹₃D¹₁₈₀D^{1A}₁₈T¹₁
(wherein M^{1Vi} is R⁷₂(CH₂=CH)SiO_{1/2}; M^{1ϕ} is R⁷₂(C₆H₅)SiO_{1/2}; M^{1H} is R⁷₂(H)SiO_{1/2}; M^{1OSiR'} is R⁷₂(OSiR⁸₃)SiO_{1/2}; D^{1ϕ} is R⁷(C₆H₅)SiO_{2/2}; D^{1OH} is R⁷(OH)SiO_{2/2}; D^{1OSiR'} is R⁷(OSiR⁸₃)SiO_{2/2}; T¹ is R⁷SiO_{3/2}.; T^{1A} is ASiO_{3/2}; Q¹ is SiO_{4/2}; Rand R⁸ are each an alkyl group having 1 to 6 carbon atoms such as a methyl group or an ethyl group; (C₆H₅) is a phenyl group; and A is the same as that in formula (7) above).

The amount of component (C) added is 0.01 to 5.0 parts by weight and preferably 0.1 to 2.0 parts by weight based on 100 parts by weight of component (A). If the amount is less than 0.01 parts by weight, the effect of facilitating curing is unclear. If the amount exceeds 5.0 parts by weight, the amount of the migrating component increases, and this may result in a reduction in residual adhesion rate and deterioration of adhesiveness.

To produce component (C), the following method may be used. Raw materials such as M¹₂, M¹₂D¹₃, M^{1A}₂, D^{1A}₄, and D¹₄ (M¹, M^{1A} D¹, and D^{1A} are the same as those in formula (6)) are mixed, and the mixture is equilibrated using an acid or alkali catalyst and dried under reduced pressure. In this case, it is preferable to add a phenol-based antioxidant such as dibutylhydroxytoluene or a hindered amine-based antioxidant such as tetramethylpiperidine or an aromatic secondary amine. The catalyst used is preferably a strong acid such as sulfuric acid, fluorosulfonic acid, or trifluoromethanesulfonic acid.

### [Component (D)]

The platinum group metal-based catalyst (D) in the invention may be any known compound used as an addition reaction catalyst. Examples of the platinum group metal-based catalyst include platinum-based, palladium-based, rhodium-based, and ruthenium-based catalysts. Of these, platinum-based catalysts are particularly preferably used. Examples of the platinum-based catalyst include platinum-based compounds, complexes of platinum with vinylsiloxanes, alcohol and aldehyde solutions of chloroplatinic acid, complex salts of chloroplatinic acid with olefins, and complexes of chloroplatinic acid with vinylsiloxanes.

The amount of component (D) added is the amount of the catalyst. Generally, in an organopolysiloxane composition for release paper or release film, the concentration of the platinum group metal added for producing a cured film is 100 to 500 ppm by weight in the organopolysiloxane composition for release paper or release film. The amount of the platinum group metal-based catalyst added in the invention is 1 to 100 ppm, preferably 1 to 60 ppm, still more preferably 1 to 40 ppm, and most preferably 1 to 30 ppm, calculated as the weight of the platinum group metal relative to the total weight of the organopolysiloxane composition (the total weight of components (A) to (D)).

### [Component (E)]

The diluting solvent component (E) is an optional component and is not used when the composition of the invention is used as a solvent-less composition. However, when component (A) is a high-viscosity organopolysiloxane, a thin coating film can be easily formed on a substrate by using the diluting solvent to reduce the viscosity of the composition. By using component (E) as a solvent and as a compatibilizer for preventing a plurality of different components forming the organopolysiloxane composition from being separated from each other, a coating solution with a uniform chemical composition can be provided. By applying the coating solution to various substrates, highly levelled and wettable organopolysiloxane composition layers can be formed, and this allows highly-smooth cured silicone films having a uniform thickness and having a smooth surface to be formed.

In particular, component (E) is often an essential component when the organopolysiloxane composition is applied to a film substrate that is required to have good surface smoothness, high transparency, and good appearance.

Examples of the diluting solvent that can be used include: various organic solvents (excluding siloxane solvents) soluble in organopolysiloxanes that include aromatic solvents such as toluene and xylene, aliphatic-based solvents such as hexane and heptane, ketone-based solvents such as acetone and methyl ethyl ketone (also known as 2-butanone), ester-based solvents such as ethyl acetate, and ether-based solvents such as diethyl ether; and organopolysiloxanes (siloxane solvents) including low-viscosity cyclic siloxanes such as octamethyltetrasiloxane and decamethylpentasiloxane, linear siloxanes such as M₂Dₚ (M and D are the same as those in formula (2), and p is 0 to 200 and preferably 1 to 50), and branched siloxanes such as M_{2+q}DₚT_{q} (M, D, and T are the same as those in formula (2); p is 0 to 200 and preferably 1 to 50; and q is 1 to 10 and preferably 1 to 3).

When the diluting solvent is used, the amount of the diluting solvent is 1 to 100,000 parts by weight based on 100 parts by weight of the organopolysiloxane used as component (A). If the amount is less than 1 part by weight, the viscosity is excessively high. If the amount exceeds 100,0000 parts by weight, the viscosity is excessively low, and the ease of application deteriorates. The amount of the diluting solvent is more preferably 1,000 to 10,000 parts by weight.

### [Component (F)]

The addition reaction inhibitor component (F) in the invention is an optional component and controls the catalytic activity of the platinum group metal-based catalyst. Examples of component (F) include various organic nitrogen compounds, organophosphorus compounds, acetylene-based compounds, oxime compounds, and organic chloro compounds. Specific examples of component (F) include: acetylene-based alcohols such as 1-ethynyl-1-cyclohexanol, 3-methyl-1-butyn-3-ol, 3,5-dimethyl-1-hexyn-3-ol, 3-methyl-1-penten-3-ol, and phenylbutynol; acetylene-based compounds such as 3-methyl-3-1-pentene-1-yne and 3,5-dimethyl-1-hexyne-3-yne; reaction products of acetylene-based compounds with alkoxysilanes, siloxanes, or hydrogen silanes such as 1,1-dimethylpropynyloxytrimethylsilane; vinylsiloxanes such as cyclic tetramethylvinylsiloxane; organic nitrogen compounds such as benzotriazole; other organophosphorus compounds; oxime compounds; maleic acid compounds such as diallyl maleate; and organic chloro compounds.

The amount of component (F) when it is used is preferably 0.01 to 5 parts by weight and more preferably 0.1 to 3 parts by weight based on 100 parts by weight of component (A).

### [Component (G)]

Component (G) added may be a component that can improve adhesiveness to a substrate. Component (G) is (G) an organopolysiloxane having at least two alkenyl groups and including, as essential unis, R¹⁰_{(3-g1)}R⁹_{g1}SiO_{1/2} siloxane units (M^{R9R10} units) and R¹⁰SiO_{3/2} siloxane units (T^{R10} units) (wherein each R⁹ is independently an alkenyl group; each R¹⁰ is independently an unsubstituted or halo- or cyano-substituted monovalent hydrocarbon group free of aliphatic unsaturation; and g1 is an integer of 1 to 3). The molar ratio of the M^{R9R10} units/the T^{R10} units is 2/8 to 8/2, and the viscosity of component (G) at 25°C is in the range of 1 to 1,000 m Pa·s. The molecular terminals of component (G) are M^{R9R10} units or are M^{R9R10} units and partially silanol or alkoxy groups. It is preferable that M^{R1R2} units are bonded to the molecular terminals. However, silanol or alkoxy groups may form some molecular terminals.

Examples of R⁹ in the above formulas include the same alkenyl groups as those for P in formula (2) above. Of these, a vinyl group is preferred from an industrial point of view. Specific examples of R¹⁰ include monovalent hydrocarbon groups free of aliphatic unsaturation including: alkyl groups such as a methyl group, an ethyl group, a propyl group, a butyl group, a pentyl group, a hexyl group, an octyl group, a decyl group, and a dodecyl group; cycloalkyl groups such as a cyclohexyl group; aryl groups such as a phenyl group, a naphthyl group, and a tolyl group; and aralkyl groups such as a benzyl group and a phenethyl group. Of these, a methyl group and a phenyl group are preferred from an industrial point of view. g1 is an integer of 1 to 3 and is preferably 1 or 2.

Component (G) is an organopolysiloxane in which the molar ratio of the M^{R9R10} units/the T^{R10} units satisfies 2/8 to 8/2 and preferably 3/7 to 7/3. If the molar ratio is less than 2/8, the effect of improving adhesiveness may be small. If the molar ratio exceeds 8/2, component (G) is difficult to produce industrially.

Bifunctional R¹⁰_{(2-g2)}R⁹_{g2}SiO_{2/2} siloxane units (in this formula, g2 is 0, 1, or 2, and these units are denoted as D^{R9R10} units) and tetrafunctional SiO_{4/2} siloxane units (Q units) may be included so long as the effects of component (G) are not impaired. In particular, when stronger adhesiveness is required for the release film, it is preferable to use a siloxane that does not contain these units and has a molar ratio of the M^{R9R10} units/the T^{R10} units in the range of 2/8 to 8/2. When the D^{R9R10} units or the Q units are included, they must be used such that their amount is smaller than both the amount of the M^{R9R10} units and the amount of the T^{R10} units.

Component (G) differs from component (A) in that the amount of the T^{R10} units is larger than the amount of the D^{R9R10} units.

The amount of the alkenyl groups in the organopolysiloxane component (G) is preferably 0.01 to 2.5 mol/100 g, more preferably 0.03 to 2.0 mol/100 g, and still more preferably 0.05 to 1.5 mol/100 g. If the amount is excessively small, the effect of improving the adhesiveness may be small. If the amount is excessively large, pot life may be shortened.

The organopolysiloxane component (G) has a viscosity at 25°C of 1 to 1,000 mPa·s, preferably 5 to 500 mPa·s, more preferably 10 to 100 mPa·s, and still more preferably 10 to 50 mPa·s. It is preferable that the degree of polymerization is such that the viscosity falls within the above range. If the viscosity is less than 1 mPa·s, the effect of improving the adhesiveness may be small. If the viscosity exceeds 1,000 mPa·s, the solubility or dispersibility of compound (G) in the composition may deteriorate.

Specific examples of component (G) include the following compounds: 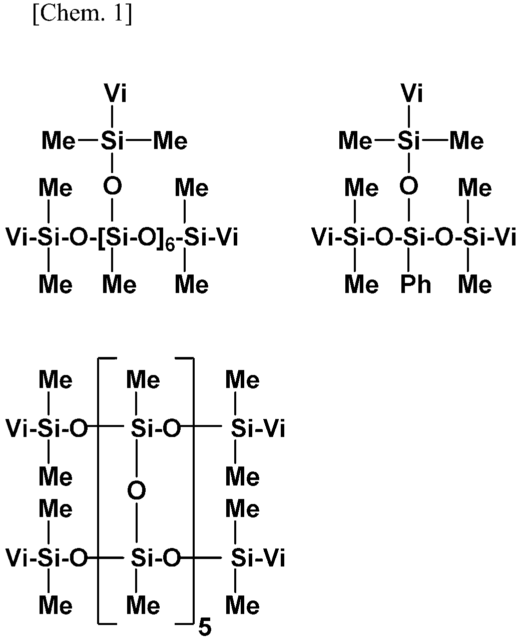 (wherein Me represents a methyl group; Vi represents a vinyl group; and Ph represents a phenyl group).

When component (G) is added, the amount of component (G) added is preferably 0.1 to 20 parts by weight and more preferably 0.15 to 10 parts by weight based on 100 parts by weight of component (A). If the amount is less than 0.1 parts by weight, the effect of improving adhesiveness to a substrate may be small. If the amount exceeds 20 parts by weight, the releasability of the cured film may deteriorate.

When component (G) is added, it is preferable, from the viewpoint of preventing a reduction in the releasability of the cured film, that component (C) is additionally added in such an amount that the ratio of the number of moles of SiH groups in component (C) to the number of moles of alkenyl groups in component (G) (i.e., SiH groups/alkenyl groups) is 1 or more and particularly 1 to 5.

### [Optional components]

Components generally added to organopolysiloxane compositions for release paper or release film may be added to the organopolysiloxane composition of the invention so long as the effects of the invention are not impaired.

Even when the organopolysiloxane composition is diluted with an organic solvent, the characteristics of the organopolysiloxane composition do not deteriorate.

Examples of the optional additional components include: high-molecular weight linear organopolysiloxanes other than components (A) to (C) that are added to impart slidability; aryl group-containing silicone resins other than components (A) to (C) that are added in order to control the release force; silicone resins; silica; and low-molecular weight organopolysiloxanes having no silicon-bonded hydrogen atoms and no silicon-bonded alkenyl groups.

### [Production method]

The organopolysiloxane composition of the invention is obtained by mixing prescribed amounts of components (A) to (D) and prescribed amounts of optional components (E) to (G) and other optional components.

The viscosity of the obtained organopolysiloxane composition measured by an Ostwald viscometer at 25°C is preferably 1 to 100 mPa·s and more preferably 5 to 50 mPa·s.

### [Applications and usage]

The organopolysiloxane composition of the invention is applied to, for example, a sheet-like substrate such as paper or plastic film using coating rolls (such as a three-roll mill, a five-roll mill, gravure rolls, offset gravure rolls, etc.) and heat-cured using a routine procedure. A cured silicone film of the organopolysiloxane composition of the invention is thereby formed on one side of the sheet-like substrate and is suitably used as, for example, a release sheet.

Examples of the paper substrate include glassine paper, polyethylene-laminated paper, polyvinyl alcohol resin-coated paper, and clay-coated paper. Examples of the plastic film substrate include films of polyolefins such as polyethylene and polypropylene and films of polyesters such as polyethylene terephthalate.

It is only necessary to apply the organopolysiloxane composition in an amount sufficient to form a cured silicone film on the surface of the sheet-like substrate. The coating weight is, for example, about 0.1 to about 50.0 g/m². However, an excessively larger coating weight may result in a reduction in release performance.

The conditions for heat curing vary depending on the type of substrate and the coating weight. By heating the organopolysiloxane composition at 80 to 200°C and preferably 100 to 180°C for 1 to 60 seconds and preferably 2 to 30 seconds, a cured film can be formed on the substrate.

A release force measured using tesa 7475 tape (tesa UK Ltd.) is preferably 0.4 N or less and more preferably 0.10 to 0.40 N. The release force measured by a transfer method using BPS-5127 is preferably 0.1 N or less and more preferably 0.04 to 0.1 N.

The residual adhesion rate is preferably 91% or more and more preferably 94% or more.

### EXAMPLES

The present invention will next be specifically described by way of Examples and Comparative Examples. However, the invention is not limited to the following Examples. Each average molecular weight shown below was determined by ²⁹Si-NMR. Each viscosity shown below is a value measured using a rotational viscometer at 25°C, and each kinematic viscosity shown below is a value measured using an Ostwald viscometer at 25°C.

### [Raw materials used]

Component (A)
   • Methylvinylpolysiloxane (A1)
      Polysiloxane having the following structure and having a vinyl value of 0.0073 mol/100 g and a 30 wt% toluene solution viscosity at 25°C of 20,000 mPa·s
      {(CH₂=CH)₃SiO_{1/2}}₂{(CH₂=CH)(CH₃)SiO_{2/2}}₄₈{(CH₃)₂SiO_{2/2}}₁₀₀₀₀
   • Methylvinylpolysiloxane (A2): No siloxane unit represented by formula (1)
      Polysiloxane having the following structure and having a vinyl value of 0.0067 mol/100 g and a 30 wt% toluene solution viscosity at 25°C of 20,000 mPa·s
      {(CH₂=CH)(CH₃)₂SiO_{1/2}}₂{(CH₂=CH)(CH₃)SiO_{2/2}}₄₈{(CH₃)₂SiO_{2/2}}₁₀₀₀₀
   • Methylvinylpolysiloxane (A3)
      Polysiloxane having the following structure and having a vinyl value of 0.051 mol/100 g and a viscosity at 25°C of 400 mPa·s
      {(CH₂=CH)₃SiO_{1/2}}₂{(CH₃)₂SiO_{2/2}}₁₅₅
   • Methylvinylpolysiloxane (A4): No siloxane unit represented by formula (1)
      Polysiloxane having the following structure and having a vinyl value of 0.017 mol/100 g and a viscosity at 25°C of 400 mPa·s
      {(CH₂=CH)(CH₃)₂SiO_{1/2}}₂{(CH₃)₂SiO_{2/2}}₁₅₅
   • Methylphenylvinylpolysiloxane (A5): No siloxane unit represented by formula (1)
      Polysiloxane having the following structure and having a vinyl value of 0.002 mol/100 g, a phenyl group content of 2% by mol, and a 30 wt% toluene solution viscosity at 25°C of 800 mPa·s
      {(CH₂=CH)(CH₃)₂SiO_{1/2}}₂{(CH₂=CH)(CH₃)SiO_{2/2}}₆{(CH₃)₂SiO_{2/2}}₅₀₀₀{(C₆H₅)₂SiO_{2/2}}₇₇
   • Methylphenylvinylpolysiloxane (A6)
      Polysiloxane having the following structure and having a vinyl value of 0.018 mol/100 g, a phenyl group content of 10% by mol, and a 30 wt% toluene solution viscosity at 25°C of 10,000 mPa·s
      {(CH₂=CH)₃SiO_{1/2}}₂{(CH₂=CH)(CH₃)SiO_{2/2}}₈₀{(CH₃)₂SiO_{2/2}}₅₀₀₀{(C₆H₅)₂SiO_{2/2}}₅₅₀
Component (B)
   - Methylhydrogenpolysiloxane (B1)
      Methylhydrogenpolysiloxane terminated with trimethylsiloxy groups at both ends of the molecular chain, including (CH₃)HSiO_{2/2} units and (CH₃)₂SiO_{2/2} units, having a Si-H group content of 1.42 mol/100 g, and having a kinematic viscosity of 110 mm²/s
      {(CH₃)₃SiO_{1/2}}₂{(CH₃)HSiO_{2/2}}₉₀{(CH₃)₂SiO_{2/2}}₁₀
   - Methylhydrogenpolysiloxane (B2)
      Methylhydrogenpolysiloxane terminated with trimethylsiloxy groups at both ends of the molecular chain, composed entirely of (CH₃)HSiO units except for the trimethylsiloxy groups at the both ends, having a Si-H group content of 1.59 mol/100 g, and having a kinematic viscosity of 35 mm²/s
      {(CH₃)₃SiO_{1/2}}₂{(CH₃)HSiO_{2/2}}₆₀
   - Methylphenylhydrogenpolysiloxane (B3)
      Methylphenylhydrogenpolysiloxane terminated with trimethylsiloxy groups at both ends of the molecular chain, composed entirely of (CH₃)HSiO units and (C₆H₅)₂SiO units except for the trimethylsiloxy groups at the both ends, having a Si-H group content of 1.19 mol/100 g and a phenyl group content of 10% by mol, and having a kinematic viscosity of 100 mm²/s
      {(CH₃)₃SiO_{1/2}}₂{(CH₃)HSiO_{2/2}}₇₃{(C₆H₅)₂SiO_{2/2}}₈
   - Methylphenylhydrogenpolysiloxane (B4)
      Methylphenylhydrogenpolysiloxane terminated with trimethylsiloxy groups at both ends of the molecular chain, composed entirely of (CH₃)HSiO units and (C₆H₅)₂SiO units except for the trimethylsiloxy groups at the both ends, having a Si-H group content of 0.84 mol/100 g and a phenyl group content of 22% by mol, and having a kinematic viscosity of 120 mm²/s
      {(CH₃)₃SiO_{1/2}}₂{(CH₃)HSiO_{2/2}}₇₀{(C₆H₅)₂SiO_{2/2}}₂₀
Component (C)
   - Acrylic acid (C1): HOOCH=CH₂; molecular weight 72
   - 2-Ethylhexyl acrylate (C2):
      CH₂=CH-(CO)-O-CH₂CH(C₂H₅)C₄H₉; molecular weight 213.5
   - 2-Hydroxyethyl acrylate (C3):
      CH₂=CH-(CO)-O-CH₂CH₂OH; molecular weight 116
   - 4-Hydroxybutyl acrylate glycidyl ether (C4):
      Compound represented by the following formula and having an acrylic group at one end and a glycidyl ether group at the other end; molecular weight 200 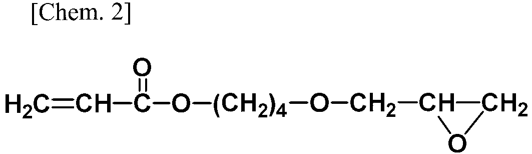
   - Polysiloxanes having (meth)acrylic groups
      M³₂D³₁₇₀D^{3A}₂₂ (C5); weight average molecular weight 16,526
      M³₃D³₁₁₀D^{3A}₆T³₁ (C6); weight average molecular weight 9,482
      M³₃D³₁₈₀D^{3A}₁₈T³₁ (C7); weight average molecular weight 16,726
      M^{3A}₂D³₃₇D^{3A}₈ (C8); weight average molecular weight 4,472
      M³₂D³₂₀D^{3A}₅ (C9); weight average molecular weight 2,502
      M³₂D³₂₀D^{3MA}₅ (C10); weight average molecular weight 2,516
      D^{3A}₄ (C11); weight average molecular weight 689
      T³_{0.6}T^{3A}_{4.4}(OR¹¹)₇ (C12); weight average molecular weight 928
      (wherein M³ is R¹¹₃SiO_{1/2}; M^{3A} is R¹¹₂A¹SiO_{1/2}; D³ is R¹¹₂SiO_{2/2}; D^{3A} is R¹¹A¹SiO_{2/2}; D^{3MA} is R¹¹(MA)SiO_{2/2}; T³ is R¹¹SiO_{3/2}; T^{3A} is A¹SiO_{3/2}; R¹¹ is a methyl group; A¹ is CH₂=CHCOO(CH₂)₃-; and MA is CH₂=CCH₃COO(CH₂)₃-).
   - Additional additive component (Comparative Example)
      M^{3A}₂D³₁ (C13); weight average molecular weight 432
      (wherein M^{3A} is R¹¹₂A¹SiO_{1/2}; D³ is R¹¹₂SiO_{2/2}; R¹¹ is a methyl group; and A¹ is CH₂=CHCOO(CH₂)₃-).
Component (F)
   3-Methyl-1-butyn-3-ol (F1)
   1-Ethynyl-1-cyclohexanol (F2)
Component (G)
   Organopolysiloxane (G1) having a viscosity at 25°C of 30 mPa·s, terminated mainly with dimethylvinylsilyl groups at ends of the molecular chain, and including 50% by mol of (CH₃)₂CH₂=CHSiO_{1/2} units and 50% by mol of CH₃SiO_{3/2} units (vinyl group content = 0.6 mol/100 g)
Component (H)
   PERHEXA C (manufactured by NOF CORPORATION, 1,1-di(t-butylperoxy)cyclohexane (H1), 10-hour half-life temperature: 90.7°C, exothermic onset temperature: 134°C)

### 1) Comparison of effects of component (C)

### 1-1) Evaluation of solvent-type chemical compositions

### [Example 1]

100 Parts by weight of methylvinylpolysiloxane (A1) used as component (A), 1.54 parts by weight of methylhydrogenpolysiloxane (B1) used as component (B), 1.3 parts by weight of polysiloxane D^{3A}₄ (C11) used as component (C) and having acrylic groups on side chains, 1,200 parts by weight of toluene and 1,200 parts by weight of hexane used as component (E), and 3 parts by weight of 3-methyl-1-butyn-3-ol (F1) used as component (F) were added, and the mixture was stirred until uniform. Then a platinum-vinylsiloxane complex used as component (D) was added in such an amount that the content of platinum atoms was 80 ppm by weight based on the total weight of components (A), (B), (C), and (D), and the mixture was stirred until uniform to thereby prepare an organopolysiloxane composition having a viscosity of 10 mm²/s and an H/Vi (the ratio of Si-H groups in component (B) to alkenyl groups in component (A) (the same applies to the following)) of 3.

### [Example 2]

An organopolysiloxane composition having a viscosity of 10 mm²/s and an H/Vi of 3 was prepared using the same procedure as in Example 1 except that component (C) was changed to 1.3 parts by weight of 4-hydroxybutyl acrylate glycidyl ether (C4).

### [Example 3]

An organopolysiloxane composition having a viscosity of 10 mm²/s and an H/Vi of 3 was prepared using the same procedure as in Example 1 except that component (C) was changed to 1.3 parts by weight of polysiloxane M³₂D³₁₇₀D^{3A}₂₂ (C5) having acrylic groups on side chains.

### [Example 4]

An organopolysiloxane composition having a viscosity of 10 mm²/s and an H/Vi of 3 was prepared using the same procedure as in Example 1 except that component (C) was changed to 1.3 parts by weight of polysiloxane M³₃D³₁₈₀D^{3A}₁₈T³₁ (C7) having acrylic groups on side chains.

### [Example 5]

An organopolysiloxane composition having a viscosity of 10 mm²/s and an H/Vi of 3 was prepared using the same procedure as in Example 1 except that component (C) was changed to 1.3 parts by weight of polysiloxane M^{3A}₂D³₃₇D^{3A}₈ (C8) having acrylic groups at ends and on side chains.

### [Example 6]

An organopolysiloxane composition having a viscosity of 10 mm²/s and an H/Vi of 3 was prepared using the same procedure as in Example 1 except that component (C) was changed to 4 parts by weight of polysiloxane M³ ₂D³₂₀D^{3A}₅ (C9) having acrylic groups on side chains.

### [Example 7]

An organopolysiloxane composition having a viscosity of 10 mm²/s and an H/Vi of 3 was prepared using the same procedure as in Example 1 except that component (C) was changed to 0.3 parts by weight of polysiloxane M³₂D³₂₀D^{3A}₅ (C9) having acrylic groups on side chains.

### [Example 8]

An organopolysiloxane composition having a viscosity of 10 mm²/s and an H/Vi of 3 was prepared using the same procedure as in Example 1 except that component (C) was changed to 0.3 parts by weight of acrylic group-containing polysiloxane T³_{0.6}T^{3A}_{4.4}(OR⁷)₇ (C12).

### [Example 9]

An organopolysiloxane composition having a viscosity of 10 mm²/s and an H/Vi of 3 was prepared using the same procedure as in Example 1 except that the platinum-vinylsiloxane complex used as component (D) was added in such an amount that the content of platinum atoms was 30 ppm by weight based on the total weight of components (A), (B), (C), (D), and (E) and the mixture was stirred until uniform.

### [Reference Example 1]

100 Parts by weight of methylvinylpolysiloxane (A1) used as component (A), 1.54 parts by weight of methylhydrogenpolysiloxane (B1) used as component (B), 1,200 parts by weight of toluene and 1,200 parts by weight of hexane used as component (E), and 3 parts by weight of 3-methyl-1-butyn-3-ol (F1) used as component (F) were added, and the mixture was stirred until uniform. Then a platinum-vinylsiloxane complex used as component (D) was added in such an amount that the content of platinum atoms was 160 ppm by weight based on the total weight of components (A), (B), (C), and (D), and the mixture was stirred until uniform to thereby prepare an organopolysiloxane composition having a viscosity of 10 mm²/s and an H/Vi (the ratio of Si-H groups in component (B) to alkenyl groups in component (A) (the same applies to the following)) of 3.

### [Comparative Example 1]

100 Parts by weight of methylvinylpolysiloxane (A1) used as component (A), 1.54 parts by weight of methylhydrogenpolysiloxane (B1) used as component (B), 1,200 parts by weight of toluene and 1,200 parts by weight of hexane used as component (E), and 3 parts by weight of 3-methyl-1-butyn-3-ol (F1) used as component (F) were added, and the mixture was stirred until uniform. Then a platinum-vinylsiloxane complex used as component (D) was added in such an amount that the content of platinum atoms was 80 ppm by weight based on the total weight of components (A), (B), (C), and (D), and the mixture was stirred until uniform to thereby prepare an organopolysiloxane composition having a viscosity of 10 mm²/s and an H/Vi of 3.

### [Comparative Example 2]

An organopolysiloxane composition having a viscosity of 10 mm²/s and an H/Vi of 3 was prepared using the same procedure as in Example 1 except that 1.3 parts by weight of organosiloxane M^{3A}₂D³₁ (C13) having acrylic groups at both ends was used as component (C).

### [Comparative Example 3]

An organopolysiloxane composition having a viscosity of 10 mm²/s and an H/Vi of 3 was prepared using the same procedure as in Example 1 except that 100 parts by weight of methylvinylpolysiloxane (A2) was used as component (A) and that 1.42 parts by weight of methylhydrogenpolysiloxane (B1) was used as component (B).

The organopolysiloxane compositions obtained in the Examples (Examples 1 to 9, Reference Example 1, and Comparative Examples 1 to 3) were evaluated as follows. The evaluation results, along with the corresponding chemical compositions, are shown in Tables 1 to 3.

### [Release force]

One of the organopolysiloxane compositions was applied to a polyester film using a No. 14 bar coater and heated in a hot-air drier at 120°C for 20 seconds to thereby obtain a release film including a cured organopolysiloxane composition film with a thickness of 0.3 g/m².

The obtained release film was aged at 25°C for 24 hours, and a tesa-7475 tape (tesa UK Ltd.) was applied to the surface of the cured film of the release film. The resulting release film was cut to a size of 2.5 cm × 18 cm to prepare a test piece. This test piece was held between glass plates and subjected to compression bonding at 70°C under a load of 20 g/cm² for 20 hours. Then one end portion of the test piece was peeled off. The end portion of the adhesive-coated substrate of the tape was pulled at a peeling rate of 0.3 m/min in a direction at an angle of 180 degrees with respect to the polyester film, and the force (i.e., the "release force") (N/25 mm) required to peel off the substrate was measured using a tensile tester (model AGS-50G manufactured by Shimadzu Corporation).

### [Residual adhesion rate]

After the measurement of the release force, the tesa-7475 tape (tesa UK Ltd.) was applied to a SUS plate, and a 2 kg tape roller was moved back and forth once on the tape to compression-bond the tape to the SUS plate. The resulting tape and plate were left to stand for 30 minutes, and then one end of the tesa-7475 tape was peeled off. The end of the tape was pulled in a direction at an angle of 180 degrees with respect to the SUS plate and peeled off at a peeling rate of 0.3 m/min, and the force required to peel off the tape was measured as adhesive force A (N/25 mm).

A blank virgin tesa-7475 tape was applied to a SUS plate, and a 2 kg tape roller was moved back and forth once on the tape to compression-bond the tape to the SUS plate in the same manner as described above. The resulting tape and plate were left to stand for 30 minutes, and then one end of the tesa-7475 tape was peeled off. The end of the tape was pulled in a direction at an angle of 180 degrees with respect to the SUS plate and peeled off at a peeling rate of 0.3 m/min, and the force required to peel off the tape was measured as adhesive force B (N/25 mm). The residual adhesion rate (%) was determined by computing (A/B) × 100.

### [Curability]

One of the organopolysiloxane compositions was applied to a polyester film using a No. 14 bar coater and heated in a hot-air drier at 120°C for 20 seconds to thereby obtain a release film including a cured organopolysiloxane composition film with a thickness of 0.3 g/m². Immediately after the release film was removed from the drier, the surface of the cured film was strongly rubbed ten times with a forefinger. Then a red oil-based ink was applied, and the degree of dyeing with the ink and the state of the cured film were observed.

The results were evaluated as follows. When the finger mark was clearly visible, a "×'' rating was assigned. When the finger mark was slightly visible, a "△" rating was assigned. When the finger mark was barely visible, a "○" rating was assigned.

### [Migration of silicone (organopolysiloxane)]

A cured film of one of the organopolysiloxane compositions was formed on the surface of a polyester film in the same manner as that for measuring the release force, and another polyester film was placed on the surface of the cured film and compression-bonded thereto at room temperature under a pressure of 0.98 MPa for 20 hours. Then the bonded polyester film was separated from the cured film. A red oil-based ink was applied to the surface of the polyester film that had been in contact with the cured film, and the migration of the silicone was evaluated based on the degree of ink cissing.

The results were evaluated as follows. When no ink cissing was found, a "○" rating indicating no or negligible silicone migration was assigned. When partial ink cissing was found, a "△" rating indicating slight silicone migration was assigned. When ink cissing was found, a "×'' rating indicating significant silicone migration was assigned.

### [Adhesiveness]

A release film produced in the same manner as that used for measuring the release force was left to stand for 3 days under the conditions of 25°C and 50%RH. Then the cured organopolysiloxane composition film formed on the surface of the polyester film was strongly rubbed ten times with a forefinger. Then a red oil-based ink was applied, and the degree of dyeing with the ink and the state of the cured film were observed.

The results were evaluated as follows. When no dyeing with the ink was found, a "○" rating indicating good adhesiveness was assigned. When the rubbed film was partially dyed with the ink, a "△" rating indicating partial rubbing off was assigned. When the entire rubbed film was dyed with the ink, a "×'' rating indicating complete rubbing off was assigned.

The release film was left to stand under the conditions of 60°C and 90%RH for one day to accelerate the deterioration of the adhesiveness under severer conditions. Then the adhesiveness was similarly evaluated. When no dyeing with the ink was found, a "⊚" rating indicating particularly good adhesiveness was assigned.

**[Table 1]**

| | Chemical composition (pbw) | Example 1 | Example 2 | Example 3 | Example 4 | Example 5 |
|---|---|---|---|---|---|---|
| (A) | Methylvinylpolysiloxane (A1) | 100 | 100 | 100 | 100 | 100 |
| (B) | Methylhydrogenpolysiloxane (B1) | 1.54 | 1.54 | 1.54 | 1.54 | 1.54 |
| (C) | D^{3A}₄ (C11) | 1.3 | - | - | - | - |
| | 4-Hydroxybutyl acrylate glycidyl ether (C4) | - | 1.3 | - | - | - |
| | M³₂D³₁₇₀D^{3A}₂₂ (C5) | - | - | 1.3 | - | - |
| | M³₃D³₁₈₀D^{3A}₁₈T³₁ (C7) | - | - | - | 1.3 | - |
| | M^{3A}₂D³₃₇D^{3A}₈ (C8) | - | - | - | - | 1.3 |
| (D) | Platinum catalyst: platinum concentration ppm based on total weight of components (A), (B), (C), and (D) | 80 | 80 | 80 | 80 | 80 |
| (E) | Toluene/hexane = 1/1 solvent mixture | 2,400 | 2,400 | 2,400 | 2,400 | 2,400 |
| (F) | 3-Methyl-1-butyn-3-ol | 3 | 3 | 3 | 3 | 3 |
| Evaluation results | Release force (N/25 mm) | 0.24 | 0.28 | 0.29 | 0.25 | 0.28 |
| | Residual adhesion rate (%) | 99 | 98 | 100 | 99 | 98 |
| | Curability | ○ | ○ | ○ | ○ | ○ |
| | Migration of silicone | ○ | ○ | ○ | ○ | ○ |
| | Adhesiveness | ○ | ○ | ○ | ○ | ○ |

**[Table 2]**

| | Chemical composition (pbw) | Example 6 | Example 7 | Example 8 | Example 9 |
|---|---|---|---|---|---|
| (A) | Methylvinylpolysiloxane (A1) | 100 | 100 | 100 | 100 |
| (B) | Methylhydrogenpolysiloxane (B1) | 1.54 | 1.54 | 1.54 | 1.54 |
| (C) | M³₂D³₂₀D^{3A}₅ (C9) | 4.0 | 0.3 | - | - |
| | T³_{0.6}T^{3A}_{4.4}(OR⁷)₇ (C12) | - | - | 0.3 | - |
| | D^{3A}₄ (C11) | - | - | - | 1.3 |
| (D) | Platinum catalyst: platinum concentration ppm | 80 | 80 | 80 | 30 |
| (E) | Toluene/hexane = 1/1 solvent mixture | 2,400 | 2,400 | 2,400 | 2,400 |
| (F) | 3-Methyl-1-butyn-3-ol | 3 | 3 | 3 | 3 |
| Evaluation results | Release force (N/25 mm) | 0.24 | 0.23 | 0.18 | 0.28 |
| | Residual adhesion rate (%) | 100 | 100 | 100 | 100 |
| | Curability | ○ | ○ | ○ | ○ |
| | Migration of silicone | ○ | ○ | ○ | ○ |
| | Adhesiveness | ○ | ○ | ○ | ○ |

**[Table 3]**

| | Chemical composition (pbw) | Reference Example 1 | Comparative Example 1 | Comparative Example 2 | Comparative Example 3 |
|---|---|---|---|---|---|
| (A) | Methylvinylpolysiloxane (A1) | 100 | 100 | 100 | - |
| | Methylvinylpolysiloxane (A2)* | - | - | - | 100 |
| (B) | Methylhydrogenpolysiloxane (B1) | 1.54 | 1.54 | 1.54 | 1.42 |
| (C) | M^{3A}₂D³₅ (C13) comparative product | - | - | 1.3 | - |
| | D^{3A}₄(C11) | - | - | - | 1.3 |
| (D) | Platinum catalyst: platinum concentration ppm | 160 | 80 | 80 | 80 |
| (E) | Toluene/hexane = 1/1 solvent mixture | 2,400 | 2,400 | 2,400 | 2,400 |
| (F) | 3-Methyl-1-butyn-3-ol | 3 | 3 | 3 | 3 |
| Evaluation results | Release force (N/25 mm) | 0.28 | 0.50 | 0.40 | 0.41 |
| | Residual adhesion rate (%) | 100 | 90 | 93 | 89 |
| | Curability | ○ | × | △ | × |
| | Migration of silicone | ○ | △ | △ | △ |
| | Adhesiveness | ○ | × | × | × |

| | | | | | |
|---|---|---|---|---|---|
| * No siloxane unit represented by formula (1) above. | | | | | |

### 1-2) Evaluation of solventless-type chemical compositions (organic-based components (C))

### [Example 10]

60 Parts by weight of methylvinylpolysiloxane (A3) and 40 parts by weight of methylvinylpolysiloxane (A4) used as component (A), 4.23 parts by weight of methylhydrogenpolysiloxane (B2) used as component (B), 0.5 parts by weight of acrylic acid (C1) used as component (C), and 0.3 parts by weight of 1-ethynyl-1-cyclohexanol (F2) used as component (F) were added, and the mixture was stirred until uniform. Then a platinum-vinylsiloxane complex used as component (D) was added in such an amount that the content of platinum atoms was 80 ppm by weight based on the total weight of components (A), (B), (C), and (D), and the mixture was stirred until uniform to thereby prepare a composition having a kinematic viscosity of 401 mm²/s and an H/Vi (the ratio of Si-H groups in the composition to alkenyl groups in the composition) of 1.8.

### [Example 11]

A composition having a kinematic viscosity of 403 mm²/s and an H/Vi of 1.8 was prepared using the same procedure as in Example 11 except that component (C) was changed to 0.5 parts by weight of 2-ethylhexyl acrylate (C2).

### [Example 12]

A composition having a kinematic viscosity of 400 mm²/s and an H/Vi of 1.8 was prepared using the same procedure as in Example 11 except that component (C) was changed to 0.5 parts by weight of 2-hydroxyethyl acrylate (C3).

### [Example 13]

A composition having a kinematic viscosity of 405 mm²/s and an H/Vi of 1.8 was prepared using the same procedure as in Example 1 except that component (C) was changed to 0.5 parts by weight of 4-hydroxybutyl acrylate glycidyl ether (C4).

### [Reference Example 2]

60 Parts by weight of methylvinylpolysiloxane (A3) and 40 parts by weight of methylvinylpolysiloxane (A4) used as component (A), 3.98 parts by weight of methylhydrogenpolysiloxane (B2) used as component (B), and 0.3 parts by weight of 1-ethynyl-1-cyclohexanol (F2) used as component (F) were added, and the mixture was stirred until uniform. Then a platinum-vinylsiloxane complex used as component (D) was added in such an amount that the content of platinum atoms was 120 ppm by weight based on the total weight of components (A), (B), and (D), and the mixture was stirred until uniform to thereby prepare a composition having a kinematic viscosity of 404 mm²/s and an H/Vi of 1.7.

### [Comparative Example 4]

60 Parts by weight of methylvinylpolysiloxane (A3) and 40 parts by weight of methylvinylpolysiloxane (A4) used as component (A), 4.23 parts by weight of methylhydrogenpolysiloxane (B2) used as component (B), and 0.3 parts by weight of 1-ethynyl-1-cyclohexanol (F2) used as component (F) were added, and the mixture was stirred until uniform. Then a platinum-vinylsiloxane complex used as component (D) was added in such an amount that the content of platinum atoms was 80 ppm by weight based on the total weight of components (A), (B), and (D), and the mixture was stirred until uniform to thereby prepare a composition having a kinematic viscosity of 404 mm²/s and an H/Vi of 1.8.

### [Comparative Example 5]

100 Parts by weight of methylvinylpolysiloxane (A4) used as component (A), 1.92 parts by weight of methylhydrogenpolysiloxane (B2) used as component (B), 0.5 parts by weight of acrylic acid (C1) used as component (C), and 0.3 parts by weight of 1-ethynyl-1-cyclohexanol (F2) used as component (F) were added, and the mixture was stirred until uniform. Then a platinum-vinylsiloxane complex used as component (D) was added in such an amount that the content of platinum atoms was 80 ppm by weight based on the total weight of components (A), (B), (C), and (D), and the mixture was stirred until uniform to thereby prepare a composition having a kinematic viscosity of 420 mm²/s and an H/Vi (the ratio of Si-H groups in the composition to alkenyl groups in the composition) of 1.8.

The organopolysiloxane compositions obtained in the above Examples (Examples 10 to 15, Reference Example 2, and Comparative Examples 4 to 5) were evaluated as follows. The evaluation results, along with the corresponding chemical compositions, are shown in Tables 4 to 6.

### [Release force]

One of the organopolysiloxane compositions was applied to a metal roll of an RI tester (manufactured by IHI Machinery and Furnace Co., Ltd.), and two rolls in contact with a rubber roll were rotated for 45 seconds to spread the composition uniformly over the rolls. Then the composition was transferred from the rubber roll to a polyethylene laminated paper sheet. The polyethylene laminated paper sheet with the composition transferred thereto was heated in a hot-air drier at 120°C for 20 seconds to thereby obtain a release paper sheet including a cured organopolysiloxane composition film with a thickness of 0.9 to 1.1 g/m².

The release paper sheet in this state was aged at 25°C for 24 hours, and a solvent-type acrylic adhesive BPS-5127 (manufactured by TOYO INK CO., LTD.) was applied to the surface of the cured film of the release paper sheet (to the side onto which the composition had been transferred from the rubber roll) to a thickness of 130 µm and dried in a drier at 100°C for 180 seconds. After the drying, the resulting release paper sheet was left to stand at room temperature for 10 minutes or longer. Then a high-quality paper sheet was laminated to the release paper sheet, and the resulting sheet was cut to a size of 5.0 cm × 18 cm. A 2 kg roller was moved back and forth once on the cut piece to apply a load thereto, and the resulting cut piece was aged at room temperature for 24 hours. Then one end portion of the test piece was peeled off, and the end portion of the adhesive-coated substrate of the tape was pulled at a peeling rate of 0.3 m/min in a direction at an angle of 180 degrees with respect to the polyethylene laminated paper sheet, and the force (i.e., the "release force") (N/50 mm) required to peel off the substrate was measured using a tensile tester (model AGS-50G manufactured by Shimadzu Corporation).

### [Residual adhesion rate]

One of the silicone compositions was transferred to a polyethylene laminated paper sheet using the same method as that used for measuring the release force and cured in a drier to thereby obtain a release paper sheet. The release paper sheet was aged at 23°C for 24 hours, and then a NITTO DENKO NO. 31B tape was applied to the release paper sheet. Similarly, a NITTO DENKO NO. 31B tape was applied to a Teflon (registered trademark) plate used as a comparative sample. Next, each of these laminated samples was subjected to compress bonding at 70°C under a load of 20 g/ cm² and stored for 20 hours. After the storage, each sample was left to stand at 23°C for 30 minutes, and the tape was peeled off and applied to a stainless steel plate. A 2 kg roller was moved back and forth once on the tape to compression-bond the tape to the stainless steel plate, and the bonding force was measured using a tensile tester (model AGS-50G manufactured by Shimadzu Corporation).

The bonding force of the tape applied to the Teflon (registered trademark) plate was used as a blank value, and the ratio (%) of the measured value of the sample relative to the blank value was used as a residual adhesion rate (%).

### [Curability]

One of the silicone compositions was transferred to a polyethylene laminated paper sheet using the same method as that used for the release force and heated in a hot-air drier at 120°C for 20 seconds to thereby obtain a release paper sheet including a cured organopolysiloxane composition film with a thickness of 0.9 to 1.1 g/m². Immediately after the release paper sheet was removed from the drier, the surface of the cured film was strongly rubbed ten times with a forefinger. Then a red oil-based ink was applied, and the degree of dyeing with the ink and the state of the cured film were observed.

The results were evaluated as follows. When the finger mark was clearly observed, a "×'' rating was assigned. When the finger mark was slightly observed, a "△" rating was assigned. When the finger mark was barely observed, a "○" rating was assigned.

### [Migration of silicone (organopolysiloxane)]

A polyester film was applied to the surface of a cured organopolysiloxane composition film formed on a release paper sheet obtained in the same manner as that used for measuring the release force and compression-bonded thereto at room temperature under a pressure of 0.98 MPa for 20 hours, and then the polyester film was separated from the cured film. A red oil-based ink was applied to the surface of the polyester film that had been in contact with the cured film, and the migration of the silicone was evaluated based on the degree of ink cissing.

The results were evaluated as follows. When no ink cissing was found, a "○" rating indicating no or negligible silicone migration was assigned. When partial ink cissing was found, a "△" rating indicating slight silicone migration was assigned. When ink cissing was found, a "×'' rating indicating significant silicone migration was assigned.

### [Adhesiveness]

A release paper sheet produced in the same manner as that used for measuring the release force was left to stand for 3 days under the conditions of 25°C and 50%RH. Then the cured organopolysiloxane composition film formed on the surface of the polyester film was strongly rubbed ten times with a forefinger. Then a red oil-based ink was applied, and the degree of dyeing with the ink and the state of the cured film were observed.

The results were evaluated as follows. When no dyeing with the ink was found, a "○" rating indicating good adhesiveness was assigned. When the rubbed film was partially dyed with the ink, a "△" rating indicating partial rubbing off was assigned. When the entire rubbed film was dyed with the ink, a "×'' rating indicating complete rubbing off was assigned.

The release film was left to stand under the conditions of 60°C and 90%RH for one day to accelerate the deterioration of the adhesiveness under severer conditions. Then the adhesiveness was similarly evaluated. When no dyeing with the ink was found, a "⊚" rating indicating particularly good adhesiveness was assigned.

**[Table 4]**

| | Chemical composition (pbw) | Example 10 | Example 11 | Example 12 | Example 13 |
|---|---|---|---|---|---|
| (A) | Methylvinylpolysiloxane (A3) | 60 | 60 | 60 | 60 |
| | Methylvinylpolysiloxane (A4)* | 40 | 40 | 40 | 40 |
| (B) | Methylhydrogenpolysiloxane (B2) | 4.23 | 4.23 | 4.23 | 4.23 |
| (C) | Acrylic acid (C1) | 0.5 | - | - | - |
| | 2-Ethylhexyl acrylate (C2) | - | 0.5 | - | - |
| | 2-Hydroxyethyl acrylate (C3) | - | - | 0.5 | - |
| | 4-Hydroxybutyl acrylate glycidyl ether (C4) | - | - | - | 0.5 |
| (D) | Platinum catalyst: platinum concentration ppm | 80 | 80 | 80 | 80 |
| (E) | Toluene/hexane = 1/1 solvent mixture | - | - | - | - |
| (F) | 1-Ethyl-1-cyclohexanol | 0.3 | 0.3 | 0.3 | 0.3 |
| Evaluation results | Release force (N/50 mm) | 0.09 | 0.10 | 0.09 | 0.08 |
| | Residual adhesion rate (%) | 95 | 94 | 95 | 97 |
| | Curability | ○ | ○ | ○ | ○ |
| | Migration of silicone | ○ | ○ | ○ | ○ |
| | Adhesiveness | ○ | ○ | ○ | ○ |

| | | | | | |
|---|---|---|---|---|---|
| * No siloxane unit represented by formula (1) above. | | | | | |

**[Table 5]**

| | Chemical composition (pbw) | Reference Example 2 | Comparative Example 4 | Comparative Example 5 |
|---|---|---|---|---|
| (A) | Methylvinylpolysiloxane (A3) | 60 | 60 | - |
| | Methylvinylpolysiloxane (A4)* | 40 | 40 | 100 |
| (B) | Methylhydrogenpolysiloxane (B2) | 4.23 | 4.23 | 1.92 |
| (C) | Acrylic acid (C1) | - | - | 0.5 |
| (D) | Platinum catalyst: platinum concentration ppm | 120 | 80 | 80 |
| (E) | Toluene/hexane = 1/1 solvent mixture | - | - | - |
| (F) | 1-Ethyl-1-cyclohexanol | 0.3 | 0.3 | 0.3 |
| Evaluation results | Release force (N/50 mm) | 0.11 | 0.14 | 0.10 |
| | Residual adhesion rate (%) | 95 | 90 | 91 |
| | Curability | ○ | △ | △ |
| | Migration of silicone | ○ | △ | ○ |
| | Adhesiveness | ○ | ○ | ○ |

| | | | | |
|---|---|---|---|---|
| * No siloxane unit represented by formula (1) below. | | | | |

### 1-3) Evaluation of solventless-type chemical compositions (silicone-based components (C))

### [Example 14]

An organopolysiloxane composition having a viscosity of 401 mm²/s and an H/Vi of 1.8 was prepared using the same procedure as in Example 10 except that 1 part by weight of organosiloxane M³₂D³₂₀D^{3MA}₅ (C10) having methacrylic groups on side chains was used as component (C) and that a platinum-vinylsiloxane complex used as component (D) was added in such an amount that the content of platinum atoms was 20 ppm by weight based on the total weight of components (A), (B), (C), and (D).

### [Example 15]

An organopolysiloxane composition having a viscosity of 410 mm²/s and an H/Vi of 1.8 was prepared using the same procedure as in Example 14 except that component (C) was changed to 1 part by weight of polysiloxane M³₃D³₁₁₀D^{3A}₆T³₁ (C6) having acrylic groups on side chains.

### [Reference Example 3]

60 Parts by weight of methylvinylpolysiloxane (A3) and 40 parts by weight of methylvinylpolysiloxane (A4) used as component (A), 3.98 parts by weight of methylhydrogenpolysiloxane (B2) used as component (B), and 0.3 parts by weight of 1-ethynyl-1-cyclohexanol (F2) used as component (F) were added, and the mixture was stirred until uniform. Then a platinum-vinylsiloxane complex used as component (D) was added in such an amount that the content of platinum atoms was 120 ppm by weight based on the total weight of components (A), (B), and (D), and the mixture was stirred until uniform to thereby prepare a composition having a kinematic viscosity of 404 mm²/s and an H/Vi of 1.7.

### [Comparative Example 6]

60 Parts by weight of methylvinylpolysiloxane (A3) and 40 parts by weight of methylvinylpolysiloxane (A4) used as component (A), 4.23 parts by weight of methylhydrogenpolysiloxane (B2) used as component (B), and 0.3 parts by weight of 1-ethynyl-1-cyclohexanol (F2) used as component (F) were added, and the mixture was stirred until uniform. Then a platinum-vinylsiloxane complex used as component (D) was added in such an amount that the content of platinum atoms was 20 ppm by weight based on the total weight of components (A), (B), and (D), and the mixture was stirred until uniform to thereby prepare a composition having a kinematic viscosity of 404 mm²/s and an H/Vi of 1.8.

### [Comparative Example 7]

100 Parts by weight of methylvinylpolysiloxane (A4) used as component (A), 1.92 parts by weight of methylhydrogenpolysiloxane (B2) used as component (B), 1 part by weight of organosiloxane M³₂D³₂₀D^{3MA}₅ (C10) used as component (C) and having methacrylic groups on side chains, and 0.3 parts by weight of 1-ethynyl-1-cyclohexanol (F2) used as component (F) were added, and the mixture was stirred until uniform. Then a platinum-vinylsiloxane complex used as component (D) was added in such an amount that the content of platinum atoms was 20 ppm by weight based on the total weight of components (A), (B), (C), and (D), and the mixture was stirred until uniform to thereby prepare a composition having a kinematic viscosity of 420 mm²/s and an H/Vi (the ratio of Si-H groups in the composition to alkenyl groups in the composition) of 1.8.

The organopolysiloxane compositions obtained in the above Examples (Examples 14 to 15, Reference Example 3, and Comparative Examples 6 to 7) were evaluated as follows. The evaluation results, along with the corresponding chemical compositions, are shown in Table 6.

### [Release force]

One of the obtained compositions was applied to a metal roll of an RI tester (manufactured by IHI Machinery and Furnace Co., Ltd.), and two rolls including the metal roll and a rubber roll were rotated for 45 seconds to spread the composition uniformly. Then the composition was transferred from the rubber roll to a glassine paper sheet ASP (manufactured by Ahlstrom-munksjo). The glassine paper sheet with the composition transferred thereto was heated in a hot-air drier at 120°C for 20 seconds to thereby obtain a release paper sheet including a cured composition film with a thickness of 0.9 to 1.1 g/m². The release paper sheet in this state was aged at 25°C for 24 hours, and a tesa-7475 tape (tesa UK Ltd.) was applied to the surface of the cured film of the release paper sheet (to the side onto which the composition had been transferred from the rubber roll). The resulting release paper sheet was cut to a size of 2.5 cm ×18 cm. The cut piece was held between glass plates and aged at 70°C under a load of 20 g/ cm² for 24 hours. Then one end portion of the test piece was peeled off. The end portion of the adhesive-coated substrate of the tape was pulled at a peeling rate of 0.3 m/min in a direction at an angle of 180 degrees with respect to the glassine paper. The force (i.e., the "release force") (N/50 mm) required to peel off the substrate was measured using a tensile tester (model AGS-50G manufactured by Shimadzu Corporation).

### [Residual adhesion rate]

After the measurement of the release force, the tesa-7475 tape (tesa UK Ltd.) was applied to a polyester film, and a 2 kg roller was moved back and forth once on the tape to apply a load. The resulting tape and film were left to stand for 30 minutes, and then one end of the tesa-7475 tape was peeled off. The end of the tape was pulled in a direction at an angle of 180 degrees with respect to the polyester film and peeled off at a peeling rate of 0.3 m/min, and the force required to peel off the tape was measured as release force A (N/25 mm).

A blank virgin tesa-7475 tape was applied to a polyester film, and a 2 kg roller was moved back and forth once on the tape to apply a load in the same manner as described above. The resulting tape and film were left to stand for 30 minutes, and then one end of the tesa-7475 tape was peeled off. The end of the tape was pulled in a direction at an angle of 180 degrees with respect to the polyester film and peeled off at a peeling rate of 0.3 m/min. The force required to peel off the tape was measured as release force B (N/25 mm). The residual adhesion rate (%) was determined by computing (A/B) × 100.

### [Curability]

A release paper sheet was produced in the same manner as that used for measuring the release force. Immediately after the release paper sheet was removed from the drier, the surface of the cured film was strongly rubbed ten times with a forefinger. Then a red oil-based ink was applied, and the density of the ink and the state of the cured film were observed.

The results were evaluated as follows. When the finger mark was clearly observed, a "×'' rating was assigned. When the finger mark was slightly observed, a "△" rating was assigned. When the finger mark was barely observed, a "○" rating was assigned.

### [Migration of silicone (organopolysiloxane)]

A 36 µm-thick polyethylene terephthalate film was applied to the surface of a release paper sheet produced in the same manner as that used for measuring the release force and compression-bonded to the release paper sheet at room temperature under a pressure of 0.98 MPa for 20 hours. Then the polyethylene terephthalate film was detached from the cured film. An oil-based ink (product name: MAGICINK manufactured by Teranishi Chemical Industry Co., Ltd.) was applied to the surface of the polyethylene terephthalate film that had been in contact with the cured film, and the migration of the silicone was evaluated based on the degree of ink cissing according to the following criteria.

The results were evaluated as follows. When no ink cissing was found, a "○" rating indicating no or negligible silicone migration was assigned. When ink cissing was found, a "×'' rating indicating significant silicone migration was assigned.

### [Adhesiveness]

A release paper sheet produced using the same manner as that for measuring the release force was left to stand for 3 days under the conditions of 25°C and 50%RH. Then the cured organopolysiloxane composition film formed on the surface of the polyethylene laminated paper sheet was strongly rubbed ten times with a forefinger. Then a red oil-based ink was applied, and the degree of dyeing with the ink and the state of the cured film were observed.

The results were evaluated as follows. When no dyeing with the ink was found, a "○" rating indicating good adhesiveness was assigned. When the rubbed film was partially dyed with the ink, a "△" rating indicating partial rubbing off was assigned. When the entire rubbed film was dyed with the ink, a "×" rating indicating complete rubbing off was assigned.

**[Table 6]**

| | Chemical composition (pbw) | Example 14 | Example 15 | Reference Example 3 | Comp. Example 6 | Comp. Example 7 |
|---|---|---|---|---|---|---|
| (A) | Methylvinylpolysiloxane (A3) | 60 | 60 | 60 | 60 | - |
| | Methylvinylpolysiloxane (A4)* | 40 | 40 | 40 | 40 | 100 |
| (B) | Methylhydrogenpolysiloxane (B2) | 4.23 | 4.23 | 4.23 | 4.23 | 1.92 |
| (C) | M³₂D³₂₀D^{3MA}₅ (C10) | 1 | - | - | - | 1 |
| | M³₃D³₁₁₀D^{3A}₆T³₁ (C6) | - | 1 | - | - | - |
| (D) | Platinum catalyst: platinum concentration ppm | 20 | 20 | 120 | 20 | 20 |
| (E) | Toluene/hexane = 1/1 solvent mixture | - | - | - | - | - |
| (F) | 1-Ethyl-1-cyclohexanol | 0.3 | 0.3 | 0.3 | 0.3 | 0.3 |
| Evaluation results | Release force (N/50 mm) | 0.30 | 0.23 | 0.28 | 0.39 | 0.32 |
| | Residual adhesion rate (%) | 94 | 98 | 97 | 81 | 90 |
| | Curability | ○ | ○ | ○ | × | ○ |
| | Migration of silicone | ○ | ○ | ○ | × | ○ |
| | Adhesiveness | ○ | ○ | ○ | × | ○ |

| | | | | | | |
|---|---|---|---|---|---|---|
| * No siloxane unit represented by formula (1) below. | | | | | | |

### 2) Effects of phenyl group-containing components

### [Example 16]

100 Parts by weight of methylvinylpolysiloxane (A1) used as component (A), 1.04 parts by weight of methylhydrogenpolysiloxane (B1) and 0.60 parts by weight of methylphenylhydrogenpolysiloxane (B3) used as component (B), 1.3 parts by weight of polysiloxane M³₂D³₂₀D^{3A}₅ (C9) used as component (C) and having acrylic groups on side chains, 1,200 parts by weight of toluene and 1,200 parts by weight of hexane used as component (E), 3 parts by weight of 3-methyl-1-butyn-3-ol (F1) used as component (F), and 0.60 parts by weight of organopolysiloxane (G1) used as component (G) were added and the mixture was stirred until uniform. Then a platinum-vinylsiloxane complex used as component (D) was added in such an amount that the content of platinum atoms was 80 ppm by weight based on the total weight of components (A), (B), (C), and (D), and the mixture was stirred until uniform to thereby prepare an organopolysiloxane composition having a viscosity of 10 mm²/s and an H/Vi of 2.

### [Example 17]

60 Parts by weight of methylvinylpolysiloxane (A1) and 40 parts by weight of methylphenylvinylpolysiloxane (A5) used as component (A), 1.46 parts by weight of methylhydrogenpolysiloxane (B1) used as component (B), 1.3 parts by weight of polysiloxane M³₂D³₂₀D^{3A}₅ (C9) used as component (C) and having acrylic groups on side chains, 1,200 parts by weight of toluene and 1,200 parts by weight of hexane used as component (E), and 3 parts by weight of 3-methyl-1-butyn-3-ol (F1) used as component (F) were added, and the mixture was stirred until uniform. Then a platinum-vinylsiloxane complex used as component (D) was added in such an amount that the content of platinum atoms was 80 ppm by weight based on the total weight of components (A), (B), (C), and (D), and the mixture was stirred until uniform to thereby prepare an organopolysiloxane composition having a viscosity of 10 mm²/s and an H/Vi of 4.

### [Example 18]

60 Parts by weight of methylvinylpolysiloxane (A1) and 40 parts by weight of methylphenylvinylpolysiloxane (A5) used as component (A), 0.70 parts by weight of methylhydrogenpolysiloxane (B1) and 0.47 parts by weight of methylphenylhydrogenpolysiloxane (B3) used as component (B), 1.3 parts by weight of polysiloxane M³₂D³₂₀D^{3A}₅ (C9) used as component (C) and having acrylic groups on side chains, 1,200 parts by weight of toluene and 1,200 parts by weight of hexane used as component (E), 3 parts by weight of 3-methyl-1-butyn-3-ol (F1) used as component (F), and 0.60 parts by weight of organopolysiloxane (G1) used as component (G) were added, and the mixture was stirred until uniform. Then a platinum-vinylsiloxane complex used as component (D) was added in such an amount that the content of platinum atoms was 80 ppm by weight based on the total weight of components (A), (B), (C), and (D), and the mixture was stirred until uniform to thereby prepare an organopolysiloxane composition having a viscosity of 10 mm²/s and an H/Vi of 1.7.

### [Example 19]

100 Parts by weight of methylphenylvinylpolysiloxane (A6) used as component (A), 4.29 parts by weight of methylphenylhydrogenpolysiloxane (B4) used as component (B), 1.3 parts by weight of polysiloxane M³₂D³₂₀D^{3A}₅ (C9) used as component (C) and having acrylic groups on side chains, 1,200 parts by weight of toluene and 1,200 parts by weight of hexane used as component (E), 3 parts by weight of 3-methyl-1-butyn-3-ol (F1) used as component (F), and 0.60 parts by weight of organopolysiloxane (G1) used as component (G) were added, and the mixture was stirred until uniform. Then a platinum-vinylsiloxane complex used as component (D) was added in such an amount that the content of platinum atoms was 80 ppm by weight based on the total weight of components (A), (B), (C), and (D), and the mixture was stirred until uniform to thereby prepare an organopolysiloxane composition having a viscosity of 10 mm²/s and an H/Vi of 1.7.

The organopolysiloxane compositions obtained in the above Examples (Examples 16 to 19) were evaluated using the same evaluation methods and conditions as those for 1-1) Evaluation of solvent-type chemical compositions. The evaluation results, along with the corresponding chemical compositions, are shown in Table 7.

**[Table 7]**

| | Chemical composition (pbw) | Example 16 | Example 17 | Example 18 | Example 19 |
|---|---|---|---|---|---|
| (A) | Methylvinylpolysiloxane (A1) | 100 | 60 | 60 | - |
| | Methylphenylvinylpolysiloxane (A5)* | - | 40 | 40 | - |
| | Methylphenylvinylpolysiloxane (A6) | - | - | - | 100 |
| (B) | Methylhydrogenpolysiloxane (B1) | 1.04 | 1.46 | 0.70 | - |
| | Methylphenylhydrogenpolysiloxane (B3) | 0.60 | - | 0.47 | - |
| | Methylphenylhydrogenpolysiloxane (B4) | - | - | - | 4.29 |
| (C) | M³₂D³₂₀D^{3A}₅ (C9) | 1.3 | 1.3 | 1.3 | 1.3 |
| (D) | Platinum catalyst: platinum concentration ppm | 80 | 80 | 80 | 80 |
| (E) | Toluene/hexane = 1/1 solvent mixture | 2,400 | 2,400 | 2,400 | 2,400 |
| (F) | 3-Methyl-1-butyn-3-ol | 3 | 3 | 3 | 3 |
| (G) | Organopolysiloxane (G1) | 0.60 | - | 0.60 | - |
| Evaluation results | Release force (N/25 mm) | 0.28 | 1.05 | 1.30 | 2.42 |
| | Residual adhesion rate (%) | 98 | 100 | 100 | 100 |
| | Curability | ○ | ○ | ○ | ○ |
| | Migration of silicone | ○ | ○ | ○ | ○ |
| | Adhesiveness | ⊚ | ⊚ | ⊚ | ⊚ |

| | | | | | |
|---|---|---|---|---|---|
| * No siloxane unit represented by formula (1) below. | | | | | |

### 3) Effects of component (H)

### 3-1) Evaluation of solvent-type chemical compositions

### [Example 20]

100 Parts by weight of methylvinylpolysiloxane (A1) used as component (A), 1.54 parts by weight of methylhydrogenpolysiloxane (B1) used as component (B), 1 part by weight of polysiloxane M³₂D³₂₀D^{3A}₅ (C9) used as component (C) and having acrylic groups on side chains, 1561 parts by weight of toluene used as component (E), 3 parts by weight of 3-methyl-1-butyn-3-ol (F1) used as component (F), and 1 part by weight of PERHEXA C (H1) used as component (H) were added, and the mixture was stirred until uniform. Then a platinum-vinylsiloxane complex used as component (D) was added in such an amount that the content of platinum atoms was 80 ppm by weight based on the total weight of components (A), (B), (C), and (D), and the mixture was stirred until uniform to thereby prepare a composition having a kinematic viscosity of 10 mm²/s and an H/Vi (the ratio of Si-H groups in the composition to alkenyl groups in the composition) of 3.

### [Example 21]

100 Parts by weight of methylvinylpolysiloxane (A1) used as component (A), 1.54 parts by weight of methylhydrogenpolysiloxane (B1) used as component (B), 1 part by weight of polysiloxane M³₂D³₂₀D^{3A}₅ (C9) used as component (C) and having acrylic groups on side chains, 1,561 parts by weight of toluene used as component (E), and 3 parts by weight of 3-methyl-1-butyn-3-ol (F1) used as component (F) were added, and the mixture was stirred until uniform. Then a platinum-vinylsiloxane complex used as component (D) was added in such an amount that the content of platinum atoms was 80 ppm by weight based on the total weight of components (A), (B), (C), and (D), and the mixture was stirred until uniform to thereby prepare a composition having a kinematic viscosity of 10 mm²/s and an H/Vi (the ratio of Si-H groups in the composition to alkenyl groups in the composition) of 3.

### [Reference Example 4]

100 Parts by weight of methylvinylpolysiloxane (A1) used as component (A), 1.54 parts by weight of methylhydrogenpolysiloxane (B1) used as component (B), 1,561 parts by weight of toluene used as component (E), and 3 parts by weight of 3-methyl-1-butyn-3-ol (F1) used as component (F) were added, and the mixture was stirred until uniform. Then a platinum-vinylsiloxane complex used as component (D) was added in such an amount that the content of platinum atoms was 160 ppm by weight based on the total weight of components (A), (B), (C), and (D), and the mixture was stirred until uniform to thereby prepare an organopolysiloxane composition having a viscosity of 10 mm²/s and an H/Vi (the ratio of Si-H groups in the composition (B) to alkenyl groups in the composition (A) (the same applies to the following)) of 3.

### [Comparative Example 8]

100 Parts by weight of methylvinylpolysiloxane (A1) used as component (A), 1.54 parts by weight of methylhydrogenpolysiloxane (B1) used as component (B), 1,561 parts by weight of toluene used as component (E), and 3 parts by weight of 3-methyl-1-butyn-3-ol (F1) used as component (F) were added, and the mixture was stirred until uniform. Then a platinum-vinylsiloxane complex used as component (D) was added in such an amount that the content of platinum atoms was 80 ppm by weight based on the total weight of components (A), (B), (C), and (D), and the mixture was stirred until uniform to thereby prepare an organopolysiloxane composition having a viscosity of 10 mm²/s and an H/Vi of 3.

The organopolysiloxane compositions obtained in the above Examples (Examples 20 to 21, Reference Example 4, and Comparative Example 8) were evaluated as follows. The evaluation results, along with the corresponding chemical compositions, are shown in Table 8.

### [Release force]

One of the organopolysiloxane compositions was applied to a polyethylene laminated paper sheet using a No. 14 bar coater and heated in a hot-air drier at 100°C for 30 seconds to thereby obtain a release paper sheet including a cured organopolysiloxane composition film with a thickness of 0.9 to 1.1 g/m².

The release paper sheet in this state was aged at 25°C for 24 hours, and a solvent-type acrylic adhesive BPS-5127 (manufactured by TOYO INK CO., LTD.) was applied to the surface of the cured film of the release paper and dried in a drier at 100°C for 180 seconds. After the drying, the resulting release paper sheet was left to stand at room temperature for 10 minutes or longer. Then a high-quality paper sheet was laminated to the release paper sheet, and the resulting sheet was cut to a size of 5.0 cm × 18 cm. A 2 kg roller was moved back and forth once on the cut piece to apply a load thereto, and the resulting cut piece was aged at room temperature for 24 hours. Then one end portion of the test piece was peeled off. Then the end portion of the adhesive-coated substrate of the tape was pulled at a peeling rate of 0.3 m/min in a direction at an angle of 180 degrees with respect to the polyethylene laminated paper sheet, and the force (i.e., the "release force") (N/50 mm) required to peel off the high-quality paper sheet was measured using a tensile tester (model AGS-50G manufactured by Shimadzu Corporation).

### [Residual adhesion rate]

One of the silicone compositions was applied to a polyethylene laminated paper sheet using the same method as that used for the measurement of the release force and cured to thereby obtain a release paper sheet. The release paper sheet was aged at 23°C for 24 hours. Then a tesa-7475 tape (tesa UK Ltd.) was applied to the release paper sheet, and the resulting release paper sheet was cut to a size of 2.5 cm × 18 cm. The cut piece was held between glass plates and aged at 70°C under a load of 20 g/cm² for 24 hours, and then the tape was peeled off and applied to a stainless steel plate. A 2 kg roller was moved back and forth once on the tape, and the resulting tape and plate were left to stand for 30 minutes. One end of the tesa-7475 tape was peeled off. Then the end of the tape was pulled in a direction at an angle of 180 degrees with respect to the SUS plate and peeled off at a peeling rate of 0.3 m/min, and the force required to peel off the tape was measured as adhesive force A (N/25 mm). The force was measured using a tensile tester (model AGS-50G manufactured by Shimadzu Corporation).

A blank virgin tesa-7475 tape was applied to a SUS plate, and a 2 kg tape roller was moved back and forth once on the tape to compression-bond the tape to the SUS plate in the same manner as described above. The resulting tape and plate were left to stand for 30 minutes, and then one end of the tesa-7475 tape was peeled off. The end of the tape was pulled in a direction at an angle of 180 degrees with respect to the SUS plate and peeled off at a peeling rate of 0.3 m/min, and the force required to peel off the tape was measured as adhesive force B (N/25 mm). The residual adhesion rate (%) was determined by computing (A/B) × 100.

### [Curability]

One of the silicone compositions was applied to a polyethylene laminated paper sheet using the same method as that used for the release force and heated in a hot-air drier at 100°C for 30 seconds to thereby obtain a release paper sheet including a cured organopolysiloxane composition film with a thickness of 0.9 to 1.1 g/m². Immediately after the release paper sheet was removed from the drier, the surface of the cured film was strongly rubbed ten times with a forefinger. Then a red oil-based ink was applied, and the degree of dyeing with the ink and the state of the cured film were observed.

The results were evaluated as follows. When the finger mark was clearly observed, a "×" rating was assigned. When the finger mark was slightly observed, a "△" rating was assigned. When the finger mark was barely observed, a "○" rating was assigned.

### [Migration of silicone (organopolysiloxane)]

A polyester film was applied to the surface of a cured organopolysiloxane composition film formed on a release paper sheet obtained in the same manner as that used for measuring the release force and compression-bonded thereto at room temperature under a pressure of 0.98 MPa for 20 hours, and the polyester film was separated from the cured film. A red oil-based ink was applied to the surface of the polyester film that had been in contact with the cured film, and the migration of the silicone was evaluated based on the degree of ink cissing.

The results were evaluated as follows. When no ink cissing was found, a "○" rating indicating no or negligible silicone migration was assigned. When partial ink cissing was found, a "△" rating indicating slight silicone migration was assigned. When ink cissing was found, a "×" rating indicating significant silicone migration was assigned.

**[Table 8]**

| | Chemical composition (pbw) | Example 20 | Example 21 | Reference Example 4 | Comparative Example 8 |
|---|---|---|---|---|---|
| (A) | Methylvinylpolysiloxane (A1) | 100 | 100 | 100 | 100 |
| (B) | Methylhydrogenpolysiloxane (B1) | 1.54 | 1.54 | 1.54 | 1.54 |
| (C) | M³₂D³₂₀D^{3A}₅ (C9) | 1.3 | 1.3 | - | - |
| (D) | Platinum catalyst: platinum concentration ppm | 80 | 80 | 160 | 80 |
| (E) | Toluene | 1,561 | 1,561 | 1,561 | 1,561 |
| (F) | 3-Methyl-1-butyn-3-ol | 3 | 3 | 3 | 3 |
| (H) | PERHEXA C (H1) | 1 | - | - | - |
| Evaluation results | Release force (N/50 mm) | 1.4 | 2.1 | 1.2 | 3.9 |
| | Residual adhesion rate (%) | 98 | 94 | 99 | 90 |
| | Curability | ○ | ○ | ○ | ○ |
| | Migration of silicone | ○ | ○ | ○ | ○ |
| | Adhesiveness | ○ | ○ | ○ | ○ |

### 3-2) Evaluation of solventless-type chemical compositions

### [Example 22]

60 Parts by weight of methylvinylpolysiloxane (A3) and 40 parts by weight of methylvinylpolysiloxane (A4) used as component (A), 4.23 parts by weight of methylhydrogenpolysiloxane (B2) used as component (B), 1 part by weight of polysiloxane M³₂D³₂₀D^{3A}₅ (C9) used as component (C) and having acrylic groups on side chains, 0.3 parts by weight of 1-ethynyl-1-cyclohexanol (F2) used as component (F), and 1 part by weight of PERHEXA C (H1) used as component (H) were added, and the mixture was stirred until uniform. Then a platinum-vinylsiloxane complex used as component (D) was added in such an amount that the content of platinum atoms was 60 ppm by weight based on the total weight of components (A), (B), (C), and (D), and the mixture was stirred until uniform to thereby prepare a composition having a kinematic viscosity of 406 mm²/s and an H/Vi (the ratio of Si-H groups in the composition to alkenyl groups in the composition) of 1.8.

### [Example 23]

60 Parts by weight of methylvinylpolysiloxane (A3) and 40 parts by weight of methylvinylpolysiloxane (A4) used as component (A), 4.23 parts by weight of methylhydrogenpolysiloxane (B2) used as component (B), 1 part by weight of polysiloxane M³₂D³₂₀D^{3A}₅ (C9) used as component (C) and having acrylic groups on side chains, and 0.3 parts by weight of 1-ethynyl-1-cyclohexanol (F2) used as component (F) were added, and the mixture was stirred until uniform. Then a platinum-vinylsiloxane complex used as component (D) was added in such an amount that the content of platinum atoms was 60 ppm by weight based on the total weight of components (A), (B), (C), and (D), and the mixture was stirred until uniform to thereby prepare a composition having a kinematic viscosity of 405 mm²/s and an H/Vi (the ratio of Si-H groups in the composition to alkenyl groups in the composition) of 1.8.

### [Reference Example 5]

60 Parts by weight of methylvinylpolysiloxane (A3) and 40 parts by weight of methylvinylpolysiloxane (A4) used as component (A), 4.23 parts by weight of methylhydrogenpolysiloxane (B2) used as component (B), and 0.3 parts by weight of 1-ethynyl-1-cyclohexanol (F2) used as component (F) were added, and the mixture was stirred until uniform. Then a platinum-vinylsiloxane complex used as component (D) was added in such an amount that the content of platinum atoms was 120 ppm by weight based on the total weight of components (A), (B), (C), and (D), and the mixture was stirred until uniform to thereby prepare a composition having a kinematic viscosity of 400 mm²/s and an H/Vi (the ratio of Si-H groups in the composition to alkenyl groups in the composition) of 1.8.

### [Comparative Example 9]

60 Parts by weight of methylvinylpolysiloxane (A3) and 40 parts by weight of methylvinylpolysiloxane (A4) used as component (A), 4.23 parts by weight of methylhydrogenpolysiloxane (B2) used as component (B), and 0.3 parts by weight of 1-ethynyl-1-cyclohexanol (F2) used as component (F) were added, and the mixture was stirred until uniform. Then a platinum-vinylsiloxane complex used as component (D) was added in such an amount that the content of platinum atoms was 60 ppm by weight based on the total weight of components (A), (B), (C), and (D), and the mixture was stirred until uniform to thereby prepare a composition having a kinematic viscosity of 400 mm²/s and an H/Vi (the ratio of Si-H groups in the composition to alkenyl groups in the composition) of 1.8.

The organopolysiloxane compositions obtained in the above Examples (Examples 22 to 23, Reference Example 5, and Comparative Example 9) were evaluated using the same evaluation methods and conditions as those for 1-3) Evaluation of solventless-type chemical compositions (silicone-based components (C)). The evaluation results, along with the corresponding chemical compositions, are shown in Table 9.

**[Table 9]**

| | Chemical composition (pbw) | Example 22 | Example 23 | Reference Example 5 | Comparative Example 9 |
|---|---|---|---|---|---|
| (A) | Methylvinylpolysiloxane (A3) | 60 | 60 | 60 | 60 |
| | Methylvinylpolysiloxane (A4) | 40 | 40 | 40 | 40 |
| (B) | Methylhydrogenpolysiloxane (B2) | 4.23 | 4.23 | 4.23 | 4.23 |
| (C) | M³₂D³₂₀D^{3A}₅ (C9) | 1 | 1 | - | - |
| (D) | Platinum catalyst: platinum concentration ppm | 60 | 60 | 120 | 60 |
| (E) | Toluene/hexane = 1/1 solvent mixture | - | - | - | - |
| (F) | 1-Ethyl-1-cyclohexanol | 0.3 | 0.3 | 0.3 | 0.3 |
| (H) | PERHEXA C (H1) | 1 | - | - | - |
| Evaluation results | Release force (N/25 mm) | 0.23 | 0.25 | 0.31 | 0.48 |
| | Residual adhesion rate (%) | 96 | 94 | 92 | 88 |
| | Curability | ○ | ○ | ○ | △ |
| | Migration of silicone | ○ | ○ | ○ | △ |
| | Adhesiveness | ○ | ○ | ○ | △ |

In Reference Example 1, no component (C) is used, and the concentration of the platinum catalysis used as component (D) is large, i.e., 160 ppm. In this case, curing proceeded sufficiently. Therefore, the curability, migration of silicone, and adhesiveness were good. Moreover, the release force was small, and the residual adhesion rate was high, so that the intrinsic characteristics of the release paper were found.

In the chemical composition in Comparative Example 1, the concentration of the platinum catalyst used as component (D) is reduced to one half that in Reference Example 1, i.e., 80 ppm. In this case, curing was insufficient even after the heating treatment at 120°C for 30 seconds. Therefore, the release force was large, and the residual adhesion rate was low, so that the intrinsic characteristics of the silicone were not obtained. When the coated surface was rubbed, the finger mark was clearly observable, and the amount of migration was large, so that the curability, migration of silicone, and adhesiveness were ×, △, and ×, respectively.

Each of the chemical compositions in Examples 1 to 9 was obtained by adding a small amount of an acrylic group-containing compound as component (C) to the chemical composition in Comparative Example 1. The addition of component (C) allowed curing to proceed sufficiently even though the concentration of the platinum catalyst used as component (D) was 80 ppm. Moreover, no migration of silicone was observed, and the release force and the residual adhesion rate were comparable to those in Reference Example 1. These results indicate that component (C) allows the curing reaction to proceed even at a low platinum concentration.

A comparison between Comparative Example 2 and the Examples shows that the effects of component (C) when it is a siloxane compound are higher when acrylic groups are present on side chains than when acrylic groups are present at molecular terminals. Moreover, as can be seen from Example 8, (meth)acrylic groups not only in the bifunctional siloxane units but also in the trifunctional siloxane units are effective.

A comparison between Comparative Example 3 and Example 1 shows that, when the molecular terminals of component (A) have a trivinyl structure, the effects of component (C) are enhanced.

In Examples 10 to 13, the effects of compounds other than silicone were evaluated using the chemical compositions containing no solvent component (E). As can be seen by comparison with Comparative Example 4, component (C) serves to decrease the release force and increase the residual adhesion rate. Since characteristics close to those in Reference Example 2 containing a large amount of component (D) were obtained, component (C) was found to facilitate the curing reaction.

As can be seen by comparison with Comparative Examples, even with a chemical composition containing no solvent component (E), the effects of component (C) are enhanced when the molecular terminals of component (A) have a trivinyl structure.

In Examples 14 to 15, their chemical composition contains no solvent component (E), and the effects of the silicone compounds used as component (C) were evaluated. The amount of component (D) was reduced to 20 ppm, and the substrate was changed to glassine paper. Therefore, the curability, migration, and adhesiveness were evaluated under severer conditions. The tendency similar to that described above was also found, and component (C) was found to have the effects of improving the curability and adhesiveness and reducing migration.

In Examples 16 to 19, compounds having phenyl groups were used as components (A) and (B), and the effects of component (C) were evaluated. As can be seen by comparison with Examples 6 and 7, the effect of improving the adhesiveness is higher.

In Examples 20 to 23, component (H) was additionally mixed, and then the effects of component (C) were evaluated. Component (H) was found to further decrease the release force and increase the residual adhesion rate. This effect was the same for both the chemical compositions containing a solvent and the chemical compositions containing no solvent. However, the curing temperature of the solvent-type chemical compositions was low, i.e., 100°C, and notable effects were obtained even under the conditions where sufficient curability is difficult to achieve.

As can be seen from the results described above, the curing facilitating effect of component (C) can be further enhanced by combining the trivinyl structure at the molecular terminals of component (A), phenyl groups contained in compound (A) and/or component (B), and the addition of peroxide (H).

## Claims

1. A curable organopolysiloxane composition comprising the following components (A) to (D):
(A) 100 parts by weight of an organopolysiloxane, wherein the organopolysiloxane has at least two silicon-bonded alkenyl groups per molecule with an alkenyl group content of 0.001 to 0.7 mol/100 g and has less than three (meth)acrylic groups per molecule, wherein, in 50% by weight or more of component (A), at least one molecular terminal is capped with a siloxane unit represented by the following formula (1),
(CH₂=CH-)₃SiO_{1/2} (1)
and wherein the organopolysiloxane has a viscosity of 7 mPa·s or more as measured by a rotational viscometer at 25°C and has a 30 wt% toluene solution viscosity (a viscosity of a solution prepared by dissolving the organopolysiloxane in toluene at 30% by weight) of 70,000 mPa·s or less as measured by a rotational viscometer at 25°C;
(B) an organohydrogenpolysiloxane, wherein the organohydrogenpolysiloxane has on average at least two silicon-bonded hydrogen atoms (Si-H groups) per molecule and has less than three (meth)acrylic groups per molecule, and wherein component (B) is contained in such an amount that the number of moles of Si-H groups in component (B) is 1 to 10 times the number of moles of alkenyl groups in component (A);
(C) at least one selected from the following (C-1) and (C-2) in an amount of 0.01 to 5.0 parts by weight based on 100 parts by weight of component (A),
(C-1) a compound that is different from organopolysiloxanes, has at least one (meth)acrylic group per molecule, and has a molecular weight of 72 to 1,000, and
(C-2) an organopolysiloxane that has at least three (meth)acrylic groups per molecule and is a compound having a polystyrene-equivalent weight average molecular weight of 500 or more and 20,000 or less as measured by gel permeation chromatography (GPC) analysis (solvent: toluene) of the organopolysiloxane; and
(D) a platinum group metal-based catalyst in such an amount that a platinum concentration is 1 to 100 ppm by weight based on a total weight of components (A), (B), (C), and (D).

2. The curable organopolysiloxane composition according to claim 1, further comprising (E) a diluting solvent in an amount of 0 to 100,000 parts by weight based on 100 parts by weight of component (A).

3. The curable organopolysiloxane composition according to claim 1, further comprising (F) a reaction inhibitor in an amount of 0.01 to 5.00 parts by weight based on 100 parts by weight of component (A).

4. The curable organopolysiloxane composition according to claim 1, wherein component (B) includes component (B) in which 5 to 30% by mol of the total number of substituents on Si atoms are phenyl groups.

5. The curable organopolysiloxane composition according to claim 1, wherein component (A) includes component (A) in which 1 to 20% by mol of the total number of substituents on Si atoms are phenyl groups.

6. The curable organopolysiloxane composition according to claim 1, further comprising, in an amount of 0.1 to 20.0 parts by weight based on 100 parts by weight of component (A), (G) an organopolysiloxane having at least two alkenyl groups and including, as essential units, R¹⁰_{(3-g1)}R⁹_{g1}SiO_{1/2} siloxane units (M^{R9R10} units) and R¹⁰SiO_{3/2} siloxane units (T^{R10} units), wherein each R⁹ is independently an alkenyl group; each R¹⁰ is independently an unsubstituted or halo- or cyano-substituted monovalent hydrocarbon group free of aliphatic unsaturation; and g1 is an integer of 1 to 3, wherein a molar ratio of the M^{R9R10} units/the T^{R10} units is 2/8 to 8/2, wherein organopolysiloxane (G) has a viscosity at 25°C in a range of 1 to 1,000 mPa·s, and wherein molecular terminals of organopolysiloxane (G) are M^{R9R10} units or are M^{R9R10} units and partially silanol or alkoxy groups.

7. The curable organopolysiloxane composition according to claim 1, wherein component (C) is an organopolysiloxane having, per molecule, one or more bifunctional and/or trifunctional siloxane units each having a (meth)acrylic group.

8. The curable organopolysiloxane composition according to claim 1, further comprising (H) an organic peroxide in an amount of 0.01 to 5.0 parts by weight based on 100 parts by weight of component (A).

9. The curable organopolysiloxane composition according to claim 8, wherein component (H) is a polyfunctional organic peroxide having at least two peroxy bonds per molecule.

10. The curable organopolysiloxane composition according to claim 1, wherein platinum group metal-based catalyst (D) is contained in such an amount that the platinum concentration is 1 to 40 ppm by weight based on the total weight of components (A), (B), (C), and (D).

11. The curable organopolysiloxane composition according to any one of claims 1 to 10, wherein the curable organopolysiloxane composition is used for release paper or release film.

12. A method for producing release paper or release film using the organopolysiloxane composition for release paper or release film according to claim 11.
